# EUROPEAN PATENT SPECIFICATION

(11) **EP 4 073 769 B1**
(45) Date of publication and mention of the grant of the patent: **29.01.2025**
(21) Application number: 20838141.8
(22) Date of filing: 03.12.2020
(51) Int. Cl.: G07F 11/00, G07F 13/10, G07F 11/24, B65G 59/10

(54) **BEVERAGE VENDING MACHINE, CUP DISPENSING ASSEMBLY THEREFOR, AND RELATED METHODS**
GETRÄNKEAUTOMAT, BECHERAUSGABESYSTEM DAFÜR UND ZUGEHÖRIGE VERFAHREN
DISTRIBUTEUR AUTOMATIQUE DE BOISSONS, ENSEMBLE DE DISTRIBUTION DE GOBELETS POUR CELUI-CI ET PROCÉDÉS ASSOCIÉS

(30) Priority: 12.12.2019 US 201962947232 P
(43) Date of publication of application: 19.10.2022
(73) Proprietor: Luigi Lavazza S.p.A., 10152 Torino (IT)
(72) Inventor: MCCOY, Tony, East Allington Devon TQ9 7RP (GB); BELL, Jamie, Little Sandhurst Berkshire GU47 8QU (GB); WARHURST, John, Waterlooville Hampshire PO7 8HA (GB)
(74) Representative: Archer, Graham John
(86) International application number: PCT/GB2020/053097
(87) International publication number: WO 2021/116662

(56) References cited:
- WO-A1-2017/174992
- WO-A2-01/82249
- GB-A- 2 173 777
- GB-A- 2 394 468

## Description

### BACKGROUND

'In Cup' beverage vending machines create a beverage in a disposable cup and then present the disposable cup with the beverage therein to a consumer. Such 'In Cup' beverage vending machines use cups that are pre-filled with powdered ingredients and inject a liquid such as water (and/or milk and sugar) into the cups to form the desired beverage. The cups are typically held inside the machine in multiple stacks to maximize the number of cups that can be stored. The cups themselves are pre-filled with powdered ingredients and stacked one inside the other to facilitate ongoing handling. The cups are typically shipped in wrapped stacks of 20 or more. These stacks are then unwrapped on site and loaded into the machine in columns.

With certain cups that are stacked in this manner, the stack or one or more cups thereof may rotate when the machine is attempting to dispense a lowermost cup from the stack. The rotation of the stack during the dispensing of the cups may cause the rim of the lowermost cup to climb over the dispensing mechanism. The result of this may be that the lowermost cup is not properly dispensed, or if it is dispensed the rim has been distorted. Thus, a need exists for a beverage vending machine and a cup dispensing mechanism thereof that cures the aforementioned deficiencies.

Further examples of the prior art are disclosed in the following patent applications published under the following numbers WO2017/174992, GB2394468, WO01/82249 and GB2173777.

### BRIEF SUMMARY

According to the present invention, there is provided a beverage vending machine as set out in claim 1.

The invention is directed to a beverage vending machine and a cup dispensing assembly thereof.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention which is defined in the appended claims.

### BRIEF DESCRIPTION OF THE DRAWINGS

The present invention will become more fully understood from the detailed description and the accompanying drawings, wherein:
FIG. 1 is a perspective view of a beverage vending machine in accordance with an embodiment of the present invention;
FIG. 2 is a perspective view of the beverage vending machine of FIG. 1, wherein a door of a housing thereof is open;
FIG. 3 is a top plan view of a cup dispensing assembly of the beverage vending machine of FIG. 1;
FIG. 4 is a perspective view of a portion of the cup dispensing assembly of FIG. 3 with one of the cup dispensing mechanisms of the cup dispensing assembly supporting a stack of cups;
FIG. 5 is a close-up view of area V of FIG. 3 illustrating a cup dispensing mechanism of the cup dispensing assembly;
FIG. 6A is a perspective view of a scroll of the cup dispensing assembly of FIG. 3;
FIG. 6B is a front plan view of the scroll of FIG. 6A;
FIG. 7 is a perspective view of a ring gear of the cup dispensing mechanism of FIG. 5;
FIGS. 8A and 8B are perspective views of the cup dispensing mechanism of FIG. 6 illustrating the operation of the cup dispensing mechanism to dispense a lowermost cup in the stack of cups; and
FIG. 9A is a perspective view of the ring gear of FIG. 7 and its interaction with a first pair of scrolls of the cup dispensing mechanism;
FIG. 9B is a perspective view of the ring gear of FIG. 7 and its interaction with a second pair of scrolls of the cup dispensing mechanism;
FIG. 10 is a cross-sectional view taken alone line X-X of FIG. 9A;
FIG. 11 is a perspective view of a ring gear in accordance with another embodiment of the present invention;
FIG. 12A is a perspective view of the ring gear of FIG. 11 and its interaction with the first pair of scrolls;
FIG. 12B is a perspective view of the ring gear of FIG. 11 and its interaction with the second pair of scrolls;
FIG. 13 is a perspective view of a portion of a carousel of the cup dispensing assembly of FIG. 3 showing cam lock registers of a brake sub-system;
FIG. 14 is a top perspective view of a portion of the cup dispensing assembly of FIG. 3 showing the brake sub-system in an unlocked state;
FIG. 15 is a bottom perspective view of a portion of the cup dispensing assembly of FIG. 3 showing the brake sub-system in an unlocked state; and
FIG. 16 is a top perspective view of the portion of the cup dispensing assembly of FIG. 14 showing the brake sub-system in a locked state.

### DETAILED DESCRIPTION

The following description of the preferred embodiment(s) is merely exemplary in nature and is in no way intended to limit the invention, which is defined in the appended claims.

The description of illustrative embodiments according to principles of the present invention is intended to be read in connection with the accompanying drawings, which are to be considered part of the entire written description.

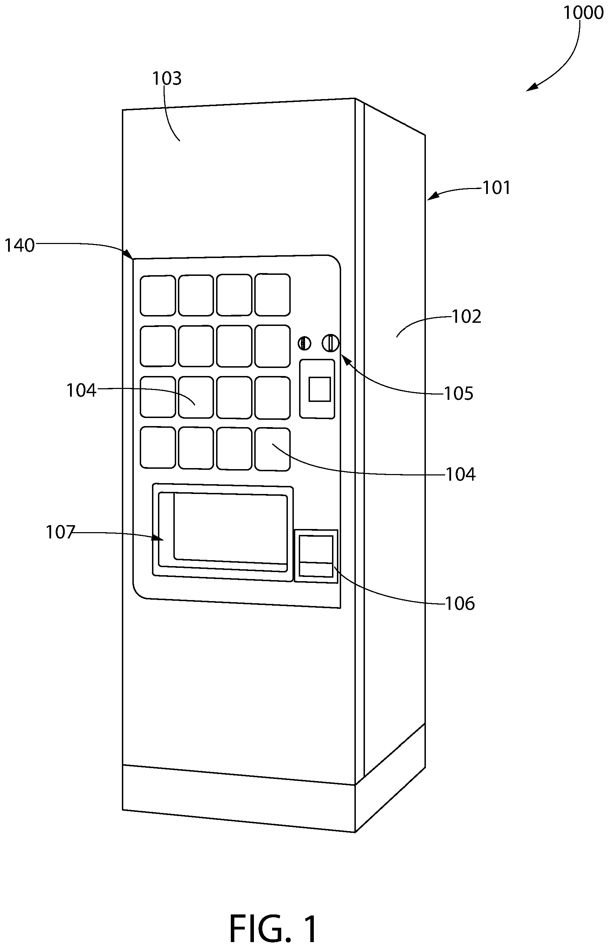

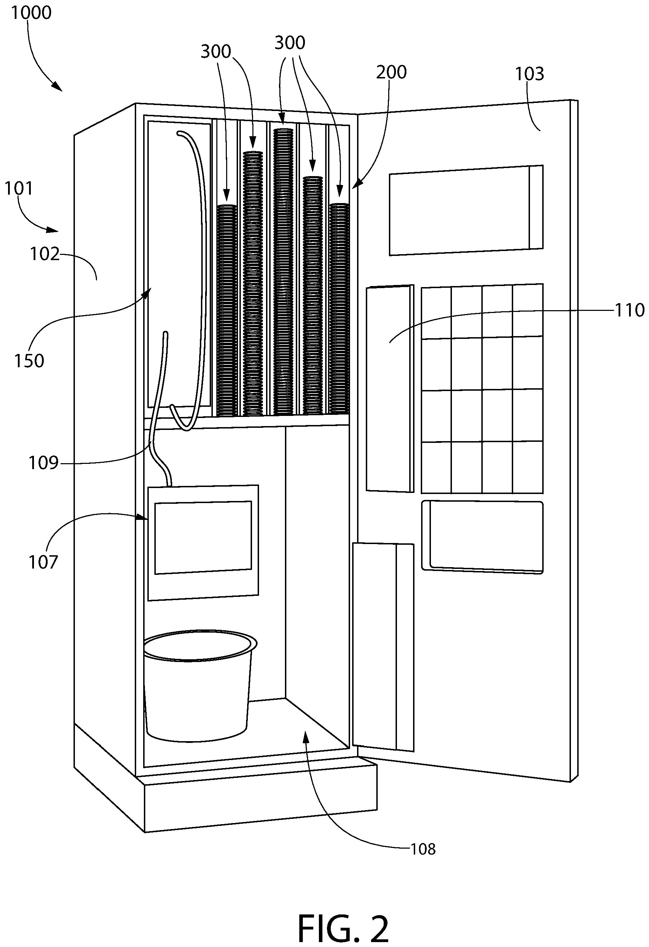

Referring to FIGS. 1 and 2, a beverage vending machine 1000 is illustrated in accordance with an embodiment of the present invention. The beverage vending machine 1000 generally comprises a housing 101, a cup dispensing assembly 200, and a liquid injection mechanism 150. Operation of the beverage vending machine 1000 includes automatic dispensing of one cup from the cup dispensing assembly 200, filling the cup (which may pre-filled with a beverage ingredient) with hot or cold water from the liquid injection mechanism 150 to form a beverage, and presentation of the cup with the beverage therein to a consumer. All of these actions are achieved by the beverage vending machine 1000 automatically upon a user putting money into the machine (if required) and pressing a button associated with a particular beverage (or otherwise providing an input associated with the particular beverage). Although the description set forth herein relates to the operation of an automatic vending machine, it should be appreciated that the concepts described herein are applicable to manual and automatic vending machines and to other cup dispensing mechanisms even when not associated with a vending machine.

As noted above, the beverage vending machine 1000 comprises the housing 101, which includes a body portion 102 and a door 103 that can be closed (FIG. 1) and open (FIG. 2). The door 103 is closed during normal use of the beverage vending machine 1000 and open during maintenance and/or when additional cups need to be inserted into the beverage vending machine 1000. Opening and closing of the door 103 can be achieved by an administrator or other authorized individual and may require the use of a key or other device to unlock the housing 101 prior to opening the door 103.

In the exemplified embodiment, the beverage vending machine 1000 comprises a user interface 140 on the door 103 of the housing 101. Of course, the user interface 140 could be located at other positions along the housing 101 in other embodiments. In the exemplified embodiment, the user interface 140 comprises a plurality of buttons 104, each of which includes indicia, graphics, or labeling for a different type of beverage. For example, one of the buttons 104 may include a graphic image of a particular type of coffee and another one of the buttons 104 may include a graphic image of hot chocolate, iced or hot tea, plain or flavored water, a type of soup, or the like. Thus, each of the buttons 104 is associated with one of the types of beverages that the beverage vending machine 1000 is configured to create. When a user desires to have a particular beverage created for him or her by the beverage vending machine 1000, the user presses (or otherwise actuates) one of the buttons 104, which causes the beverage vending machine 1000 to create the selected beverage and present a cup containing the selected beverage to the user. The user interface 140 may be a touch screen such that the buttons 104 are merely regions on the user interface 140 that can be selected via contact by a user's finger. Alternatively, the buttons 104 may protrude from the door 103 so that they can be pressed for actuation thereof. Of course, the invention is not to be limited by these examples and the buttons 104 can take on any other form used in beverage vending machines of this type.

In the exemplified embodiment, the beverage vending machine 1000 includes a payment receiving section 105 and a coin return area 106. The payment receiving section 105 may be configured to receive payment in coins, cash, or electronic payment which may include payment via a credit or debit card or payment via an electronic key that has money associated therewith. However, the beverage vending machine 1000 may be preset to operate without requiring payment in some instances, such as if the beverage vending machine 1000 is located in a place of employment and the employer desires to provide free beverages from the beverage vending machine 1000 as a perk. Furthermore, the beverage vending machine 1000 includes a beverage pick-up zone 107 which is where the user/consumer can pick up the beverage after it is made by the beverage vending machine 1000.

As shown in FIG. 2, the door 103 can be opened to expose an interior cavity 108 of the beverage vending machine 1000, which houses the cup dispensing assembly 200 and the liquid injection mechanism 150. The cup dispensing assembly 200, which will be described in much greater detail below, supports a plurality of stacks of cups 300. The cups in each particular stack of cups 300 may be pre-loaded with a beverage ingredient (e.g., coffee grounds, tea leaves, flavored powder, hot cocoa powder, soup base ingredients, or the like). Thus, once a beverage is selected by a user, the beverage vending machine 1000 dispenses a cup that is pre-loaded with the beverage ingredient used to make the selected beverage (i.e., the beverage ingredient associated with the selected beverage). For example, if the user wants a hot coffee with sugar, the beverage vending machine 1000 will dispense a cup that contains powdered coffee mixed with sugar, and if the user wants a hot cocoa, the beverage vending machine 1000 will dispense a cup that contains cocoa powder, and so on. Because there are multiple stacks of cups 300 each comprising cups that are pre-loaded with a different beverage ingredient, many different beverages can be made with the beverage vending machine 1000. Of course, some of the stacks of cups 300 may not be pre-loaded with any beverage ingredient, particularly those stacks of cups 300 that are designated for preparing water (hot or cold) for the consumer.

The liquid injection mechanism 150 comprises conduits 109 that are operably coupled to a water supply source (not shown) so that water can be made to flow into the beverage vending machine 1000 for generating a desired beverage. The water supply source may be a water main of a water supply system or it may be a filtered water source or the like. When a desired beverage is selected by a user on the user interface 140, a cup is dispensed from the cup dispensing assembly 200 and positioned so that liquid can be injected from the liquid injection mechanism 150 into the cup. The cup may be pre-loaded with a beverage ingredient (e.g., coffee grounds, tea leaves, flavored powder, hot cocoa powder, or the like) so that upon the injection of a liquid such as water into the cup, the desired beverage is formed. Depending on the beverage selected on the user interface 140, the liquid (e.g., water) may be injected at different temperatures (hot for coffee, tea, and hot chocolate and cold for plain water, flavored water, fruit juices, or the like).

In the exemplified embodiment, the beverage vending machine 1000 also includes a processor and/or circuitry 110 that includes all of the electronic components required for proper operation of the beverage vending machine 1000. For example, the processor 110 is configured to receive signals indicative of a choice of beverage selected by a consumer and initiate operation of the cup dispensing assembly 200 so that the correct beverage is generated and provided to the consumer, as described in detail herein below.

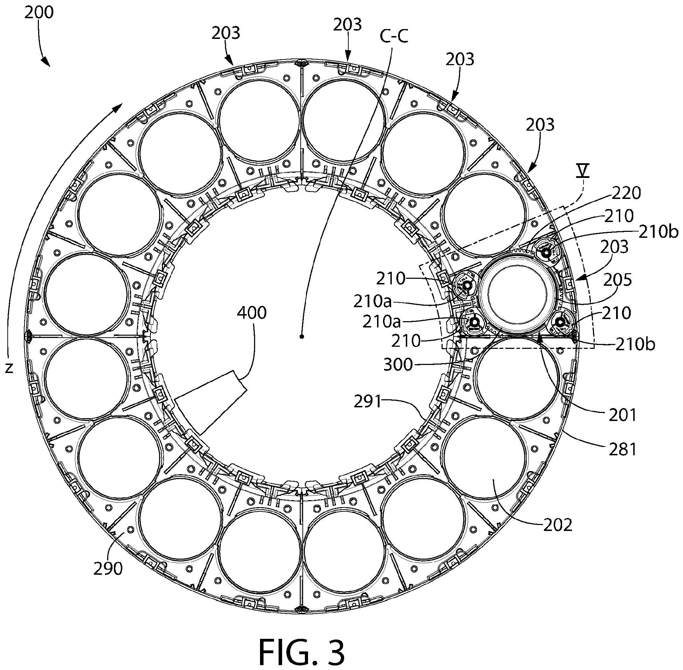

Referring to FIG. 3, a top plan view of the cup dispensing assembly 200 is illustrated. The cup dispensing assembly 200 comprises a carousel 290 that comprises a plurality of cup dispensing sections 203. In the exemplified embodiment, the carousel 290 is ring-shaped and each of the cup dispensing sections 203 is a segment or circumferential section of the ring. Thus, the cup dispensing sections 203 are arranged in a side-by-side manner such that each cup dispensing section 203 is immediately adjacent and positioned between two others of the cup dispensing sections 203.

Each of the cup dispensing sections 203 comprises a cup dispensing mechanism 201, which is configured to hold a stack of cups and to dispense cups from that stack. In FIG. 3, only one of the cup dispensing mechanisms 201 is illustrated to avoid clutter in that particular illustration. It should be appreciated that there is a cup dispensing mechanism 201 located along and associated with each of the cup dispensing sections 203 of the carousel 290. Although in the exemplified embodiment, the cup dispensing assembly 200 comprises a plurality of the cup dispensing mechanisms 201, in other embodiments the cup dispensing assembly 200 may comprise just a single cup dispensing mechanism 201.

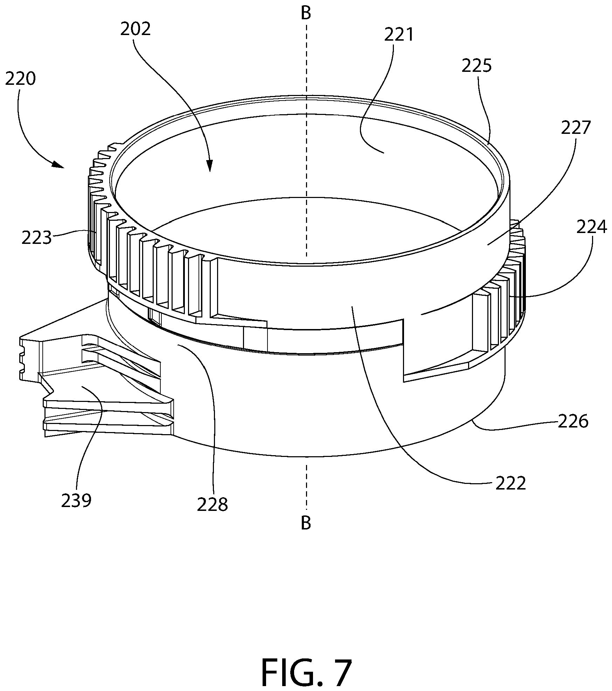

In the exemplified embodiment, the carousel 290 is configured to rotate about a rotational axis C-C in the direction of the arrow Z (or the opposite direction) during operation of the beverage vending machine 1000. In particular, the carousel 290 is moved or rotated about the rotational axis C-C in order to align a desired one of the cup dispensing mechanisms 201 and cup dispensing sections 203 with an actuator mechanism 400 (depicted generically herein) that operates in conjunction with the cup dispensing mechanism 201 with which it is aligned to dispense a cup from the cup dispensing mechanism 201 in accordance with a beverage selection made by a consumer. By "aligned" in this sense, it means that the actuator mechanism 400 is positioned to engage an actuator member (now shown, but see element 239 in FIG. 7, for example) to initiate a cup dispensing operation. However, the actuator mechanism 400 may not be perfectly circumferentially aligned with the cup dispensing mechanism 201 that it actuates, depending on the particular structure of the actuator member and the actuator mechanism 400. During operation of the beverage vending machine 1000, if a user selects coffee with sugar, the carousel 290 will rotate until the cup dispensing mechanism 201 that is supporting a stack of cups with each cup containing coffee and sugar is aligned with an actuation feature of the actuator mechanism 400. Additional details related to the actuator mechanism 400 and its operation on the cup dispensing mechanisms 201 can be found in GB2402386 published on July 19, 2006, the entirety of which is incorporated herein by reference.

In the exemplified embodiment the carousel 290 is ring-shaped and comprises an inner surface 291 and an outer surface 281. Ring-shaped may include circular and non-circular shapes in various different embodiments, although the carousel 290 is circular ring-shaped in the exemplified embodiment. The inner surface 291 of the carousel 290 surrounds or faces an opening within which additional mechanical components of the beverage vending machine 1000 (such as the actuator mechanism 400) may be positioned. The inner surface 291 of the carousel 290 forms a circle having a first diameter and the outer surface 281 of the carousel forms a circle having a second diameter which is greater than the first diameter.

In FIG. 3, the stack of cups 300 is depicted being supported by one of the cup dispensing mechanisms 201 and in that cup dispensing mechanism 201 a top plate has been removed to expose the internal components that facilitate the dispensing of an individual cup. Each of the cup dispensing mechanisms 201 may support a stack of cups holding a different beverage ingredient, although this is not shown in the drawings to avoid clutter. As noted above and described further below, when the cups are inserted into the beverage vending machine 1000, the cups may be pre-filled with a beverage ingredient (e.g., coffee grounds, hot chocolate powder, tea, flavored water powder, soup base ingredients, etc.). Thus, when a beverage is selected by a consumer, a cup having the desired beverage ingredient is dispensed from the cup dispensing assembly 200 and then either hot or cold water is added to create the beverage that is then provided to the consumer. Of course, some of the cups may not have any beverage ingredient so that the can vend plain water.

Thus, for example, one of the cup dispensing mechanisms 201 may support a stack of cups holding a coffee ingredient therein, another of the cup dispensing mechanisms 201 may support a stack of cups holding a mixture of coffee, sugar, and whitener, another of the cup dispensing mechanisms 201 may support a stack of cups holding hot chocolate, still another of the cup dispensing mechanisms 201 may support a stack of cups holding tea, and yet another of the cup dispensing mechanisms 201 may support a stack of cups that is empty (so that it can hold plain water). Of course, two of the cup dispensing mechanisms 201 may support a stack of cups holding the same ingredient in some embodiments, although each cup dispensing mechanism 201 may support a stack of cups holding different ingredients in other embodiments, depending on the total number of cup dispensing mechanisms 201 available and the total number of beverages desired to be generated by the beverage vending machine 1000. It may be desirable for each cup within a single stack to contain the same beverage ingredient.

Referring to FIGS. 3-5 concurrently, the cup dispensing mechanisms 201 and their components will be described in greater detail. Each of the cup dispensing mechanisms 201 comprises a cup dispensing aperture 202 through which a lowermost cup in the stack of cups 300 is dispensed, a plurality of scrolls 210 that support the stack of cups 300 and dispense the lowermost cup in the stack 300 when desired (i.e., when a user pushes the button to dispense a beverage that is associated with a particular stack of cups), and a ring gear 220 that interacts with the scrolls 210 as described further below to facilitate the dispensing of the cups. In the exemplified embodiment, the plurality of scrolls 210 comprises four scrolls, although more or less than four scrolls could be used in other embodiments.

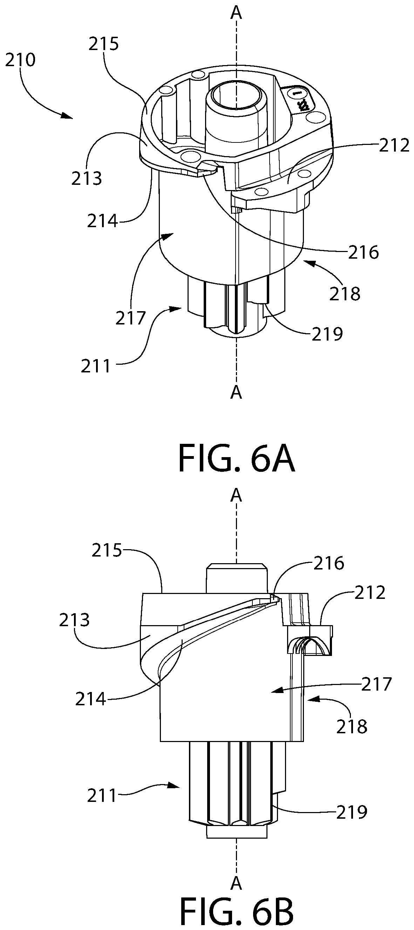

The four scrolls 210 are similar in structure, and the particular structure of the scrolls 210 will be described in greater detail below with reference to FIGS. 6A and 6B. In the exemplified embodiment, the plurality of scrolls 210 are arranged in pairs including a first pair of scrolls 210a that are positioned adjacent to one another and a second pair of scrolls 210b that are positioned adjacent to one another. In the exemplified embodiment, the first pair of scrolls 210a may be considered the inner scrolls because they are located closer to (i.e., adjacent to) the inner surface 291 of the carousel 290 and the second pair of scrolls 210b may be considered the outer scrolls because they are located closer to (i.e., adjacent to) the outer surface 281 of the carousel 290. Because there are four of the scrolls 210, the scrolls 210 are collectively arranged about (or collectively form) a four-sided polygon with each of the scrolls 210 being positioned on one of the corners of the polygon. In the exemplified embodiment, the first pair of scrolls 210a are spaced apart from one another by a first distance D1 and the second pair of scrolls 210b are spaced apart from one another by a second distance D2 that is greater than the first distance D1. Thus, in the exemplified embodiment the four-sided polygon formed by the scrolls 210 is not a square. More specifically, in the exemplified embodiment the four-sided polygon is a trapezoid, but the invention is not to be limited by this in all embodiments.

In the exemplified embodiment, the scrolls 210 all have the same diameter. However, it may be possible for the system described herein to function even with two or more of the scrolls 210 having a different diameter from one another. In embodiments where four scrolls having the same diameter are used (as with the exemplified embodiment), the four-sided polygon could b a square, rectangle, or isosceles trapezium. In other embodiments, the scrolls may have different outside diameters and they may then work when arranged in a convex quadrilateral shape.

In the exemplified embodiment, the cup dispensing aperture 202 has a centerpoint CP. Furthermore, there is a reference plane RP1-RP1 that is parallel to a longitudinal axis of the stack of cups 300 and that intersects the centerpoint CP of the cup dispensing aperture 202 so that the first pair of scrolls 210a are located on a first side of the reference plane RP1 and the second pair of scrolls 210b are located on a second side of the reference plane RP1. Stated another way, the reference plane RP1-RP1 divides a perimeter of the cup dispensing aperture 202 into a first perimetric portion and a second perimetric portion such that the first pair of scrolls 210a are located along the first perimetric portion and the second pair of scrolls 210b are located along the second perimetric portion. Furthermore, the reference plane RP1-RP1 is positioned between the inner and outer surfaces 291, 281 of the carousel 290 so that the reference plane RP1-RP1 does not intersect the inner and outer surfaces 291, 281 of the carousel 290 along the cup dispensing section 203 at issue. That is, there is a reference plane RP1 associated with each cup dispensing section 203 and the reference planes RP1 do not intersect the inner and outer surfaces 291, 281 of the carousel 290 within that cup dispensing section 203. When moving along the perimeter of the cup dispensing aperture 202, there are no scrolls located between the two scrolls of the first pair of scrolls 210a and there are no scrolls located between the two scrolls of the second pair of scrolls 210b. Rather, the two scrolls of the first pair of scrolls 210a are located adjacent to one another without any intervening scrolls and the two scrolls of the second pair of scrolls 210b are located adjacent to one another without any intervening scrolls.

As noted above, although in the exemplified embodiment there are four of the scrolls 210, the invention is not to be so limited in all embodiments and there could be more or less than four scrolls 210 in other embodiments and the spacing between the scrolls 210 could be modified to be different than that which is shown in the exemplified embodiment in some alternative embodiments. The cups of the stack of cups 300 are supported by the scrolls 210 of the cup dispensing mechanisms 201 in a right-side-up orientation. This is necessary in embodiments whereby the cups are pre-loaded with an ingredient, because in such embodiments if the cups were supported upside down or inverted the ingredient would fall out. Thus, in the right-side-up orientation, a rim 302 of a lowermost cup 301 in the stack 300 is supported by the scrolls 210 and a portion of the lowermost cup that is below the rim protrudes into and perhaps through the cup dispensing aperture 202.

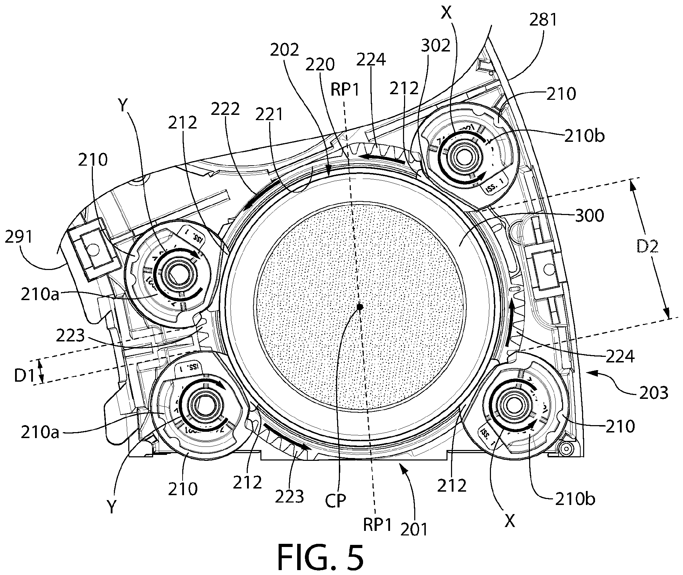

FIG. 5 is depicted with arrows on the top of each of the scrolls 210 to illustrate the direction of rotation of each of the scrolls 210 during a cup dispensing operation. In particular, the first pair of scrolls 210a rotate in a first direction Y and the second pair of scrolls 210b rotate in a second direction X which is opposite the first direction Y. Having the first and second pairs of scrolls 210a, 210b rotate in opposite directions helps to prevent the cups 300 from rotating during the dispensing operation and also prevents the scrolls 210 from damaging the rims of the cups during the dispensing operation, among other advantages. Rather, the scrolls 210 simply push the lowermost cup in the stack downwardly and away from the remainder of the stack so that the lowermost cup can be dispensed during the cup dispensing operation.

Referring to FIGS. 6A and 6B, the scrolls 210 will be described in detail. The scrolls of the first pair of scrolls 210a and the scrolls of the second pair of scrolls 210b are essentially identical, except that they may be mirror images of one another. This is due to the fact that the first pair of scrolls 210a and the second pair of scrolls 210b are configured to rotate in opposite directions during dispensing of the lowermost cup 301 from the stack 300, as mentioned above with reference to FIG. 5 and described in greater detail below. Due to the counter rotation of the various scrolls, the features of the scrolls 210 that facilitate the dispensing of the lowermost cup 301 from the stack 300 may need to extend in different directions.

The features of the scrolls 210 will be described generically with reference to FIGS. 6A and 6B, and thus the suffixes "a" and "b" will not be used after the numeral associated with each feature of the scrolls 210. However, later on in this document the scrolls 210 will be described in terms of their function and relationship with other components of the cup dispensing mechanism 201, with the first and second pairs of scrolls 210a, 210b being described separately from each other because they have different interactions with the ring gear 220. Thus, the suffixes "a" and "b" may be added to the numerals associated with various features of the scrolls 210 below when the feature being described relates specifically to one of the first or second pairs of scrolls 210a, 210b (specifically, the suffix "a" will be used when describing features that are specific to the first pair of scrolls 210a and the suffix "b" will be used when describing feature that are specific to the second pair of scrolls 210b, although the description of that particular feature provided with reference to FIGS. 6A and 6B will remain applicable unless stated otherwise).

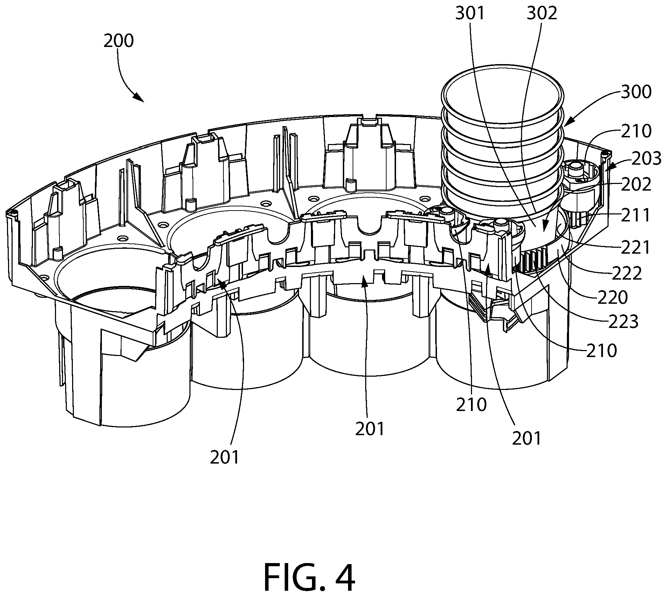

Each of the scrolls 210 comprises a body portion 218 and a gear portion 211, with the gear portion 211 protruding from a bottom end of the body portion 218. The body portion 218 of the scroll 210 comprises a support ledge 212 that is configured to support a rim of a lowermost cup of a stack of cups, thereby supporting the entire stack of cups 300. The support ledge 212 also allows for the indexing of the cups in the stack 300. The support ledge 212 protrudes from an outer surface 217 of the body portion 218 to achieve this support function and the support ledge 212 may be connected to the body portion 218 in a cantilevered manner. The support ledge 212 may be level or planar to facilitate the support of the rim of the cup as described herein. Specifically, referring briefly to FIGS. 4 and 5, the support ledges 212 of the four scrolls 210 collectively support the stack of cups 300 by the rim 302 of the lowermost cup 301 in the stack of cups 300 resting atop of the support ledges 212 of all of the scrolls 210.

Referring back to FIGS. 6A and 6B, each of the scrolls 210 also comprises a cup splitter projection 213 protruding from the outer surface 217 of the body portion 218 of the scroll 210. The cup splitter projection 213 is configured to force two adjacent cups in a stack of the cups (i.e., the lowermost cup and the second lowermost cup) to separate from one another so that the lowermost cup can be dispensed. The cup splitter projection 213 comprises a bottom surface 214 and a top surface 215. In the exemplified embodiment, the top surface 215 of the cup splitter projection 213 is flat and the bottom surface 214 of the cup splitter projection 213 is inclined. Specifically, the bottom surface 214 of the cup splitter projection 213 is oriented oblique to the axis A-A such that the bottom surface 214 of the cup splitter projection 213 extends helically about the outer surface 217 of the body portion 218. Stated another way, the cup splitter projection 213 has a tip portion 216, and a height of the cup splitter projection 213 measured between the bottom and top surfaces 214, 215 of the cup splitter projection 213 increases as the cup splitter projection 213 extends circumferentially away from the tip portion 216. This is because the top surface 215 of the cup splitter projection 213 is flat and level (and perpendicular to the axis A-A) whereas the bottom surface 214 of the cup splitter projection 213 is inclined or angled or helical.

Due to the helical nature of the bottom surface 214 of the cup splitter projection 213, as the scrolls 210 are made to rotate during a cup dispensing operation as described in greater detail below, the bottom surface 214 of the cup splitter projection 213 applies a force onto the rim 302 of the lowermost cup 301 to force the lowermost cup 301 to move downwardly and away from the remainder of the stack 300, thereby resulting in the dispensing of the lowermost cup 301 through the cup dispensing aperture 202. Depending on the rotational direction of the scroll 210 during dispensing, the cup splitter projection 213 may extend in a different direction on the various scrolls 210. Thus, for example, if the scroll 210 is made to rotate in a counterclockwise direction during dispensing, the cup splitter projection 213 will appear as shown in FIGS. 6A and 6B such that the height of the cup splitter projection 213 increases when moving clockwise around the scroll 210. However, if the scroll 210 is made to rotate in a clockwise direction during dispensing, the cup splitter projection 213 will extend in the opposite direction as that which is shown in FIGS. 6A and 6B, such that the height of the cup splitter projection 213 will increase when moving counterclockwise around the scroll 210.

As noted above, each of the scrolls 210 also includes a gear portion 211 protruding from a bottom end of the body portion 218. The gear portion 211 comprises a plurality of gear teeth 219 that mesh with or engage with teeth of the ring gear 220 as described in greater detail below to facilitate the rotation of the scrolls 210 during operation to dispense a cup. Thus, each of the scrolls 210 is rotatable about a rotational axis A-A during this operation, the rotational axes A-A being parallel to each other, to a rotational axis of the ring gear 220, and to the rotational axis C-C of the carousel 290.

Referring to FIGS. 4, 5, and 7, the ring gear 220 will be described in greater detail. The ring gear 220 is located around the cup dispensing aperture 202, and in some embodiments the ring gear 220 may define the cup dispensing aperture 202. The scrolls 210 are arranged around the ring gear 220 so as to be operably coupled to the ring gear 220 so that rotation of the ring gear 220 causes simultaneous rotation of all of the scrolls 210. Thus, in the exemplified embodiment the scrolls 210 are arranged around an outer surface of the ring gear 220 so that the gear portions 211 of the scrolls 210 mesh or engage with teeth on the outer surface of the ring gear 220.

The ring gear 220 has an inner surface 221 that faces the cup dispensing aperture 202 and an opposite outer surface 222. In the exemplified embodiment, the inner surface 221 of the ring gear 220 is smooth. Furthermore, the outer surface 222 of the ring gear 220 comprises a first set of gear teeth 223 and a second set of gear teeth 224 that are configured to interact, either directly or indirectly, with the gear teeth 219 of the gear portions 211 of the scrolls 210. Although the first and second sets of gear teeth 223, 224 are located on the outer surface 222 of the ring gear 220 in the exemplified embodiment, the invention is not to be so limited and the first and/or second sets of gear teeth 223, 224 could be located on the inner surface of the ring gear 220 in other embodiments.

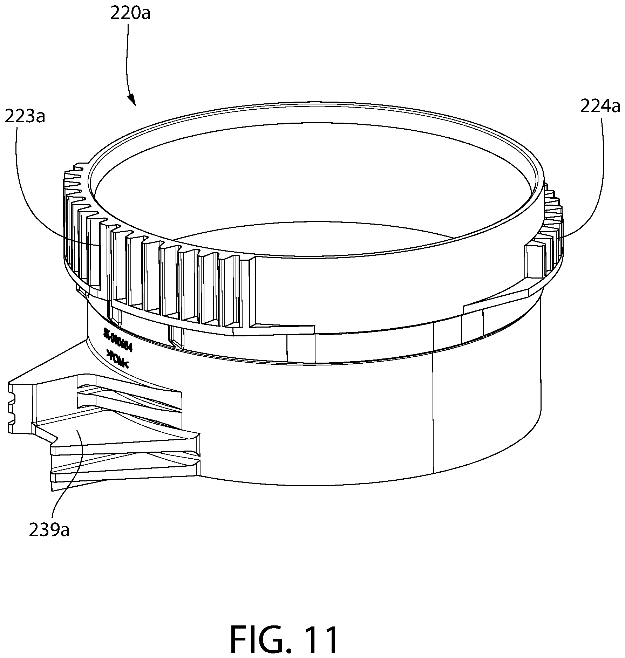

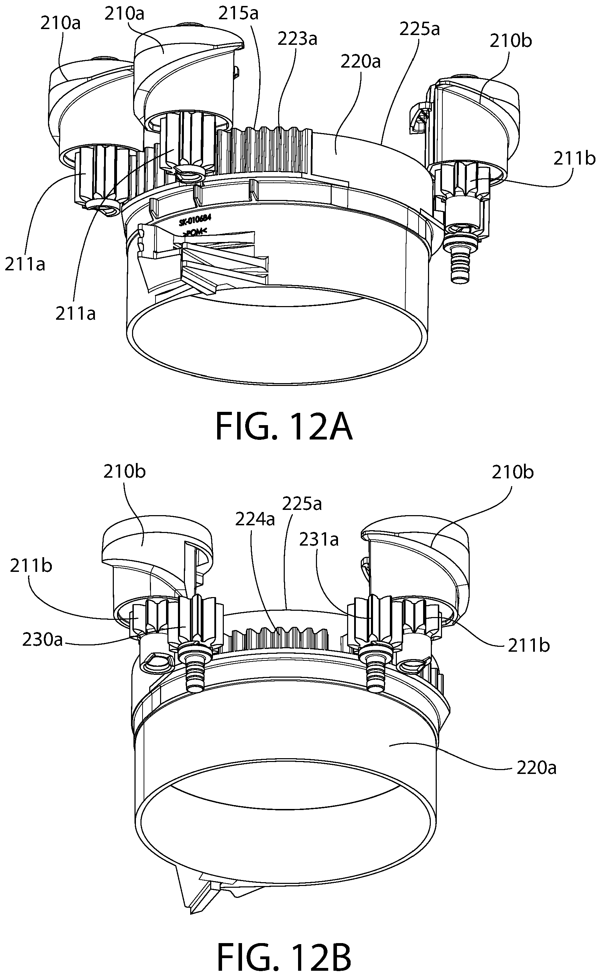

In the exemplified embodiment, the first and second sets of gear teeth 223, 224 of the ring gear 220 are not located at the same elevation along the ring gear 220. Specifically, the ring gear 220 extends from a first end 225 to a second end 226 in the direction of the rotational axis B-B. The first set of gear teeth 223 is located closer to the first end 225 of the ring gear 220 than the second set of gear teeth 224. The second set of gear teeth 224 is located closer to the second end 226 of the ring gear 220 than the first set of gear teeth 223. Thus, the first and second sets of gear teeth 223, 224 are positioned on the ring gear 220 at offset locations in the direction of the rotational axis B-B. In the exemplified embodiment, there is no overlap between the first set of gear teeth 223 and the second set of gear teeth 224. Thus, the ring gear 220 has an upper portion 227 that includes the first end 225 and a lower portion 228 that includes the second end 226. The first set of gear teeth 223 are located on the upper portion 227 of the ring gear 220 and the second set of gear teeth 224 are located on the lower portion 228 of the ring gear 220. Stated another way, in the exemplified embodiment there is no reference plane perpendicular to the rotational axis B-B of the ring gear 220 that intersects the first set of gear teeth 223 and the second set of gear teeth 224. However, in other embodiments there may be some overlap between the first and second sets of gear teeth 223, 224, such as the embodiment shown in FIGS. 11, 12A, and 12B described below.

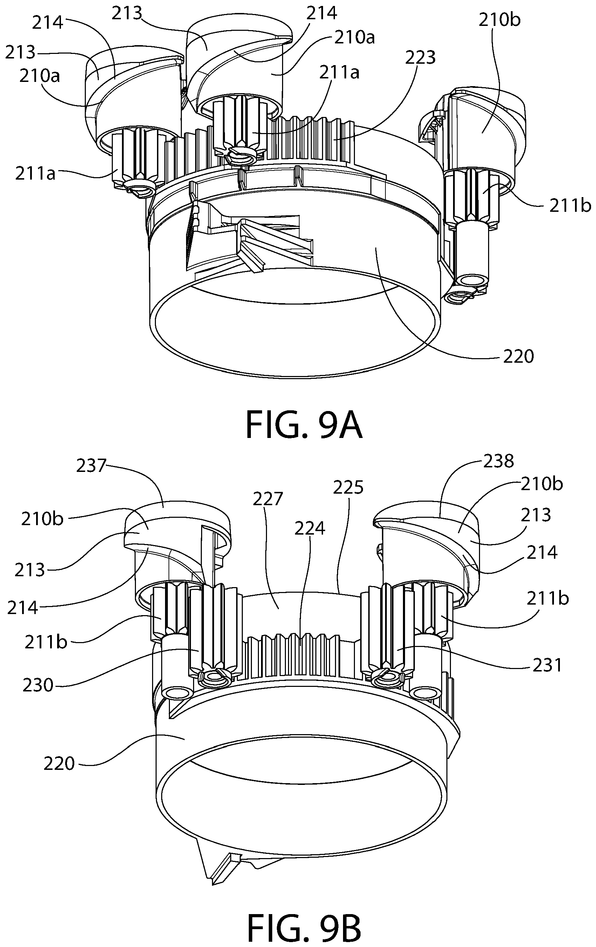

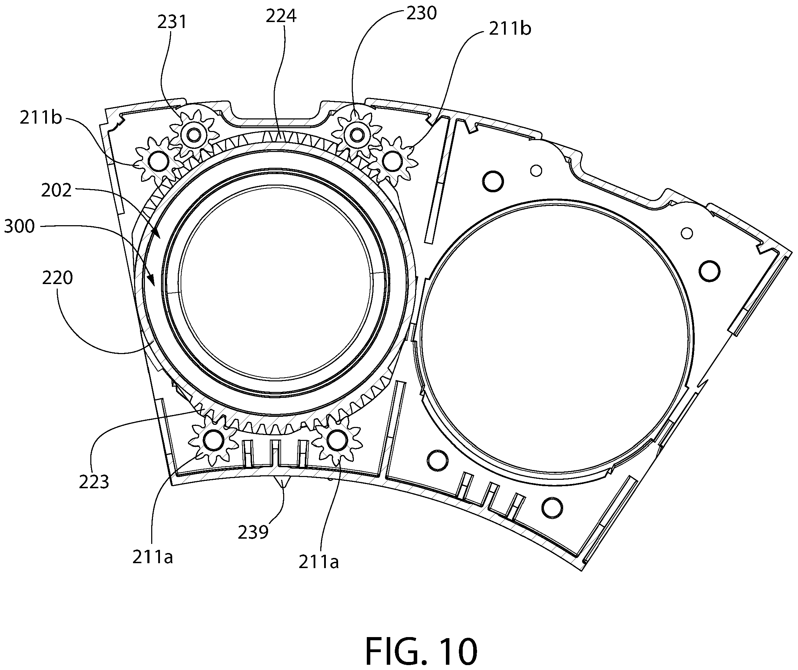

By offsetting the location of the first and second sets of gear teeth 223, 224, the scrolls 210 can be identical (other than the helical direction of the cup splitter projection 213 as noted above) while still enabling the ring gear 220 to rotate the first and second pairs of scrolls 210a, 210b in opposite directions. Thus, the scrolls of the first and second pairs of scrolls 210a, 210b have an identical size and shape in some embodiments. As a result, the gear portions 211 of all of the scrolls 210 are aligned with the upper portion 227 of the ring gear 220, as best seen in FIGS. 9A and 9B. The manner in which the counter-rotation of the scrolls is achieved in one exemplary embodiment will be described in greater detail below with reference to FIGS. 9A, 9B, and 10.

Referring again to FIG. 5, the rotation direction of the ring gear 220 and the scrolls 210 during a cup dispensing operation will be described. The ring gear 220 and each of the scrolls 210 rotate in a particular rotational direction (but not the same direction) during a cup dispensing operation, and then the ring gear 220 and each of the scrolls 210 rotates in the opposite direction after a cup has been dispensed to reset the cup dispensing mechanism 201 and prepare it for the dispensing of the next cup in the stack. That is, the ring gear 220 rotates from a storage position to a dispensing position during a cup dispensing operation, and then rotates back from the dispensing position to the storage position in between cup dispensing operations. The ring gear 220 waits in the storage position when the beverage vending machine 1000 is not currently dispensing a cup and vending a beverage.

During a cup dispensing operation, the gear ring 220 is made to rotate (via the actuator mechanism 400 shown generically in FIG. 3 and described in greater detail in GB2402386 which has previously been incorporated herein by reference) in a second rotational direction. Of course, the invention is not to be so limited in all embodiments and the ring gear 220 could alternatively be made to rotate manually by a handle. As the ring gear 220 rotates in the second rotational direction, the operable coupling between the gear portions 211 of the first pair of scrolls 210a and the first set of gear teeth 223 of the ring gear 220 causes the scrolls of the first pair of scrolls 210a to rotate in a first rotational direction, which is opposite the second rotational direction. Furthermore, as the ring gear 220 rotates in the second rotational direction, the operable coupling between the gear portions 211 of the second pair of scrolls 210b and the second set of gear teeth 224 of the ring gear 220 causes the scrolls of the second pair of scrolls 210b to rotate in the second rotational direction (i.e., in the same direction as the ring gear 220). In the exemplified embodiment, the first rotational direction is clockwise and the second rotational direction is counterclockwise. However, this could be changed in other embodiments so that the first rotational direction is counterclockwise and the second rotational direction is clockwise. The particular direction (clockwise or counterclockwise) of the first and second rotational directions is dictated, at least in part, by the structure of the scrolls 210 and particularly the helical direction of the cup splitting projections 213 thereof as noted above.

The ring gear 220 comprises an actuation member 239 that is configured to be operably coupled to the actuator mechanism 400 when it is desired to dispense a cup being supported by the cup dispensing mechanism 201 of which the ring gear 220 is a part. Thus, during operation the actuator mechanism 400 engages the actuation member 239 of the ring gear 220 and causes it to rotate, thereby causing the entire ring gear 220 to rotate about the rotational axis B-B (when a beverage associated with the particular cup dispensing section 201 is actuated/selected by a user/consumer). As the ring gear 220 rotates, the first set of gear teeth 223 of the ring gear 220 are operably coupled to the gear teeth 219 of the scrolls 210 of the first pair of scrolls 210a and the second set of gear teeth 224 of the ring gear 220 are operably coupled to the gear teeth 219 of the scrolls 210 of the second pair of scrolls 210b, thereby causing the scrolls 210 to rotate about their own respective rotational axes. The rotation of the scrolls 210 causes a lowermost cup of the stack of cups 206 to be separated from the remainder of the stack of cups 206 and thereby dispensed as the cup splitter projections 213 of the scrolls 210 drive a wedge between the lowermost cup and the second lowermost cup.

The ring gear 220 may be driven by a servo through an idler gear, for example as described in WO01/82249. However, in the exemplified embodiment the actuation member 239 of the ring gear 220 comprises a cam, and the cam is selectively operable by the actuator mechanism 400 positioned outside or inside the carousel 290 (the actuator mechanism 400 is depicted inside the carousel 290 in FIG. 3, but it could be outside of the carousel 290 in other embodiments). The cam-driven ring gear provides the advantages that a single actuator, not mounted to the carousel, can be used to drive the mechanism on any stack. Thus, it is not necessary to have a separate driver for each stack splitting mechanism. A further advantage is that the actuator mechanism 400 can be arranged so that it does not block the rotation of the carousel 290 that is needed to bring different stacks to the dispensing location. The actuator mechanism 400 preferably drives the cam in a reciprocating movement from a storage position (in which the lowermost cup of the stack is supported by the support ledges 212 on the scroll 210 as described above), to a dispensed position (in which the lowermost cup has been dispensed and the next cup in the stack is supported on the top of the cup splitting projection 213), and back to the storage position (in which the previously next cup is now the lowermost cup supported on the support ledge 212). In certain embodiments, the cam projection is situated between the second pair of scrolls 210b, and the cam actuator will then be situated radially outside the carousel. In other embodiments, the cam projection is situated between the first pair of scrolls 210a, in which case the cam actuator will be situated radially inside the carousel, and the cam projection will normally be situated above or below the plane of the scroll splitters in order to remain clear of the inner scrolls. It will be appreciated that alternative cam-driven mechanisms for rotating the scrolls, different from the ring gear, for example a belt-driven mechanism, could be contemplated within the scope of the present invention.

Once a particular beverage is selected by a consumer, the carousel 290 of the cup dispensing assembly 200 rotates until the cup dispensing section 201 containing a stack of cups having the beverage ingredient that is associated with the particular beverage selected by the consumer is aligned with the actuator mechanism 400 (shown in FIG. 3) of the cup dispensing assembly 200. Next, the actuator mechanism 400 will actuate the ring gear 220 of the selected cup dispensing mechanism 201 so that it rotates, which then causes the scrolls 210 of the selected cup dispensing mechanism 201 to rotate, which causes dispensing of one of the cups held within that cup dispensing mechanism 201 of the cup dispensing assembly 200. The actuator mechanism 400 may itself be rotated due to an operable coupling to a motor, although the exact manner of activation of the actuator mechanism 400 is not to be limiting in all embodiments of the invention set forth herein.

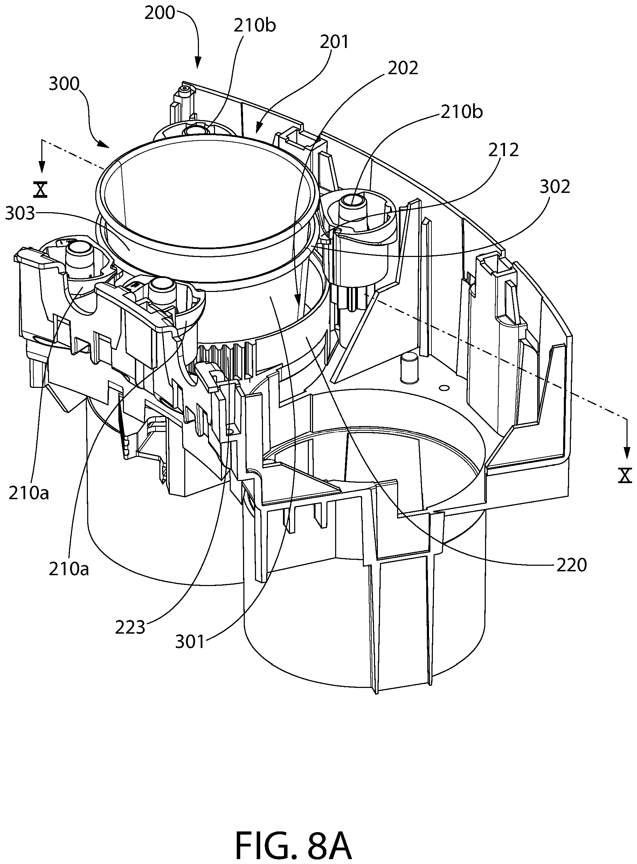

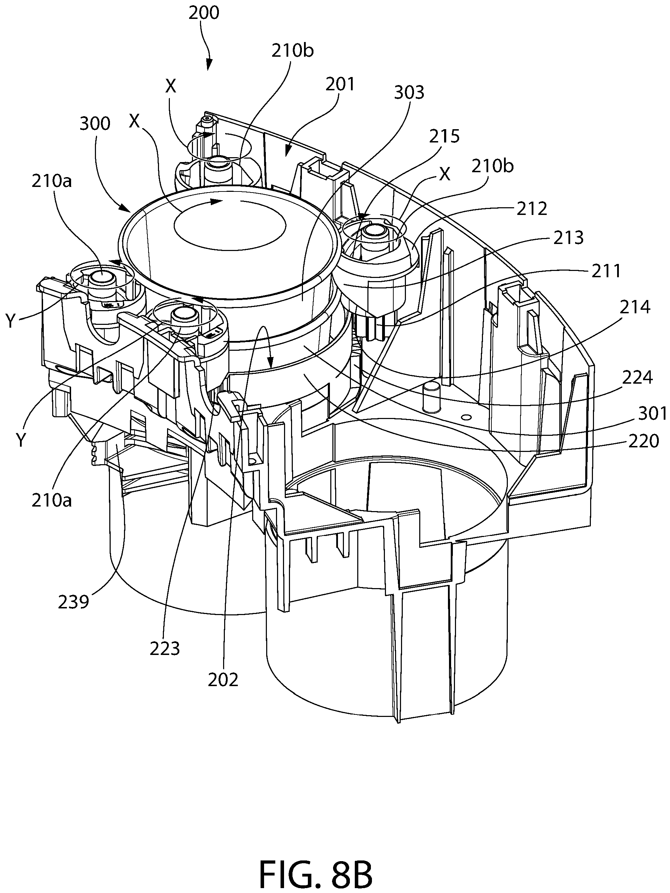

Referring to FIGS. 8A and 8B, the operation of the cup dispensing assembly 200 to dispense a lowermost cup 301 from the stack of cups 300 will be described. FIG. 8A illustrates one of the cup dispensing mechanisms 201 of the cup dispensing assembly 200 whereby the scrolls 210 are supporting the stack of cups 300 on the support ledges 212 thereof. Specifically, a rim 302 of the lowermost cup 301 of the stack of cups 300 rests on the support ledges 212 of the four scrolls 210. A bottom portion of the lowermost cup 301 (and some of the other cups in the stack of cups 300) extends through the cup dispensing aperture 202 in the cup dispensing section 201 due to the cups being in a right-side-up orientation as described above. In FIG. 8A, the cup dispensing mechanism 201 is in the storage position, which allows the lowermost cup 301 to rest atop the support ledges 212 of the scrolls 210.

Referring to FIG. 8B, the same cup dispensing section 201 of the cup dispensing assembly 200 is illustrated, but in FIG. 8B the ring gear 220 has rotated in the second rotational direction X so that the cup dispensing mechanism 201 is now in the dispensed position. As noted above, this may be achieved by rotating the actuator member 239 of the ring gear 220 with the actuator mechanism 400 (not shown in FIGS. 8A and 8B, but shown and described above). Due to the rotation of the ring gear 220 in the second rotational direction (which is clockwise in this embodiment, but could just as easily be counter-clockwise), the first pair of scrolls 210a have rotated in the first rotational direction Y and the second pair of scrolls 210b have rotated in the second rotational direction X. Specifically, as the actuator mechanism (not shown in these views) causes the ring gear 220 to rotate, the interaction between the first and second sets of gear teeth 223, 224 of the ring gear 220 and the gear teeth 211 of the scrolls 210 (either direct or indirect interaction, as described in more detail below) causes the scrolls 210 to also rotate. As the scrolls 210 begin to rotate, the rim 302 of the lowermost cup 301 is no longer supported by the support ledges 212 of the scrolls 210. However, the stack of cups 300 remains supported by the scrolls 210 because upon this first degree of rotation the rim of the second lowermost cup 303 in the stack of cups 300 rests atop of the top surface 215 of the cup splitter projections 213 of the scrolls 210. The lowermost cup 301 remains attached to the second lowermost cup 303 due to friction between the cups, but as can be seen in FIG. 8B the cup splitter projections 213 of the scrolls 210 are driving the lowermost cup 301 downwardly away from the second lowermost cup 303 through the cup dispensing aperture 202.

As the scrolls 210 continue to rotate, the cup splitter projections 213 wedges themselves in between the lowermost cup 301 and the second lowermost cup 303 to force the lowermost cup 301 to separate from the second lowermost cup 303 and be dispensed. Because the bottom surface 214 of the cup splitter projection 213 is angled or helical, rotation of the scrolls 210 causes the lowermost cup 301 to be pushed downwardly away from the second lowermost cup 303. Specifically, as the scrolls 210 rotate the distance between the portion of the top surface 215 of the cup splitter projection 213 that supports the second lowermost cup 303 and the portion of the bottom surface 214 of the cup splitter projection 213 that is contacting the lowermost cup 301 increases, which increases the size of the space/distance between the lowermost cup 301 and the second lowermost cup 303. Eventually, there is insufficient friction between the lowermost cup 301 and the second lowermost cup 303 for the lowermost cup 301 to remain attached to the stack 300. Furthermore, at this time the lowermost cup 301 is not supported by the scrolls 210 or any other component of the cup dispensing assembly 200. Thus, once a sufficient space is created between the lowermost cup 301 and the second lowermost cup 303, the lowermost cup 301 is dispensed through the cup dispensing aperture 202.

Although not shown in the drawings, once the lowermost cup 301 in the stack has been dispensed, the ring gear 220 is made to rotate in the opposite direction until the cup dispensing mechanism 201 arrives back at the storage position shown in FIG. 8A. Thus, if during dispensing of the lowermost cup 301 from the stack the ring gear 220 is rotating in a clockwise direction (the direction X), then after dispensing of the lowermost cup 301 from the stack the ring gear 220 rotates in a counter-clockwise direction. Of course, the direction at which the ring gear 220 rotates could be opposite to that which is described herein with reference to the exemplified embodiment. Specifically, the ring gear 220 is rotated in the opposite direction to "reset" the position of the ring gear 220 and of the scrolls 210 back to the position of FIG. 8A (i.e., the storage position). Thus, the ring gear 220 and the scrolls 210 rotate back to the initial position whereby the previously denoted second lowermost cup 303 (which is now the lowermost cup because the previously denoted lowermost cup 301 has been dispensed) rests atop of the support ledges 212 of the scrolls 210. Similar to that which was described above, rotation of the ring gear 220 causes rotation of the scrolls 210 due to the interaction between the first and second sets of gear teeth 223, 224 of the ring gear 220 and the gear teeth 211 of the scrolls 210.

Thus, the ring gear 220 and the scrolls 210 do not rotate a full 360° in accordance with the exemplary embodiment. Rather, the ring gear 220 and the scrolls 210 may rotate up to 300° in some embodiments, or up to any one of 290°, 280°, 270°, 260°, 250°, 240°, 230°, 220°, 210°, 200°, 190°, 180°, 170°, 160°, 150° in other embodiments. Specifically, the ring gear 220 and the scrolls 210 may rotate up to 300° (or any of the other distances) in the first direction during dispensing of the lowermost cup 301, and then the ring gear 220 and the scrolls 210 may rotate up to 300° (or any of the other distances) in a second direction that is opposite the first direction to "reset" back to the non-dispensing position. Of course, in alternative embodiments the scrolls 210 may be made to rotate through 360° in a continuous operation, although this may require the use of multiple motors instead of a single motor.

Referring to FIGS. 9A, 9B, and 10, the manner in which the ring gear 220 is able to rotate the first pair of scrolls 210a in a first rotational direction while simultaneously rotating the second pair of scrolls 210b in a second rotational direction will be described in accordance with an exemplified embodiment of the present invention. As can be seen by comparing the first pair of scrolls 210a shown in FIG. 9A to the second pair of scrolls 210b shown in FIG. 9B, the bottom surface 214 of the cup splitter projections 213 of the second pair of scrolls 210b extend in an opposite direction to the bottom surface 214 of the cup splitter projections 213 of the first pair of scrolls 210a. As a result, even though the first pair of scrolls 210a rotate in an opposite direction than the second pair of scrolls 210b during a dispensing operation, the cup splitter projections 213 of the first and second pairs of scrolls 210a, 210b will all still operate collectively to split the lowermost cup from the second to the lowermost cup.

Referring first to FIGS. 9A and 10 concurrently, the operable coupling between the ring gear 220 and the first pair of scrolls 210a will be described. In this embodiment, the gear portions 211a of the scrolls of the first pair of scrolls 210a are in direct engagement with the first set of gear teeth 223 of the ring gear 220. Thus, due to this direct mating engagement between the gear portions 211a of the scrolls of the first pair of scrolls 210a and the first set of gear teeth 223 of the ring gear 220, rotation of the ring gear 220 will directly cause rotation of the first pair of scrolls 210a. Furthermore, it should be appreciated that the ring gear 220 and the scrolls of the first pair of scrolls 210a will rotate in opposite rotational directions. Thus, if the ring gear 220 is rotating in a clockwise direction, then the first pair of scrolls 210a will be rotating in a counterclockwise direction, and vice versa.

Referring to FIGS. 9B and 10, the operable coupling between the ring gear 220 and the second pair of scrolls 210b will be described. In this embodiment, the gear portions 211b of the scrolls of the second pair of scrolls 210b are not in direct engagement with the second set of gear teeth 224 of the ring gear 220. Rather, the gear portions 211b of the scrolls of the second pair of scrolls 210b are aligned with the upper portion 227 of the ring gear 220 between the second set of gear teeth 224 and the first end 225 of the ring gear 220. Therefore, in this embodiment a first idler gear 230 is positioned in direct engagement with the second set of gear teeth 224 of the ring gear 220 and with the gear portion 211b of a first scroll of the second pair of scrolls 210b. Furthermore, a second idler gear 231 is positioned in direct engagement with the second set of gear teeth 224 of the ring gear 220 and the with the gear portion 211b of a second scroll of the second pair of scrolls 210b.

Thus, the second set of scrolls 210b are made to rotate in the opposite rotational direction relative to the first set of scrolls 210a because the ring gear 220 rotates the idler gears 230, 231, which in turn rotates the scrolls of the second set of scrolls 210b. Specifically, rotating the ring gear 220 in a second rotational direction causes the idler gears 230, 231 to rotate in the first rotational direction, which in turn causes the scrolls of the second pair of scrolls 210b to rotate in the second rotational direction. This occurs because the idler gears 230, 231 are in direct mating engagement with the second set of gear teeth 224 of the ring gear 220 and the idler gears 230, 231 are in direct mating engagement with the gear portions 211b of the second pair of scrolls 210b. Furthermore, the gear portions 211b of the second pair of scrolls 210b are not in direct mating engagement with the second set of gear teeth 224 of the ring gear 220 (or any gear teeth of the ring gear 220).

As best seen in FIG. 9B, in this embodiment the first and second idler gears 230, 231 have a height that is greater than the height of the second set of gear teeth 224 of the ring gear 220. This ensures that the first and second idler gears 230, 231 are in mating engagement with the second set of gear teeth 224 of the ring gear 220 and with the gear portions 211b of the second pair of scrolls 210b. However, the idler gears 230, 231 need not have a greater height than the second set of gear teeth 224 in all embodiments and could still be positioned in a manner that ensures its engagement with the second set of gear teeth 224 and with the gear portions 211b of the scrolls 210b.

Furthermore, in the exemplified embodiment, the first and second idler gears 230, 231 are located between the scrolls of the second pair of scrolls 210b. As noted above, in the exemplified embodiment the spacing between the second pair of scrolls 210b is greater than the spacing between the first pair of scrolls 210a. Thus, this increased spacing provides ample room for the first and second idler gears 230, 231 to be positioned between the scrolls of the second pair of scrolls 210b. However, in other embodiments the first and second idler gears 230, 231 may be positioned at other locations. For example, in one embodiment the scrolls of the second pair of scrolls 210b may be located between the first and second idler gears 230, 231.

As noted above, in the exemplified embodiment the idler gears 230, 231 are used to facilitate rotation of the second pair of scrolls 210b in a direction that is opposite the rotation direction of the first pair of scrolls 210a. However, the invention is not to be so limited in all embodiments and other techniques may be used to achieve this functionality. For example, in some embodiments a chain and sprocket configuration may be used to rotate the first and second pairs of scrolls 210a, 210b in opposite directions. In still other embodiments, the first and second pairs of scrolls 210a, 210b may be operably coupled to distinct ring gears such that a first ring gear is operably coupled to the first pair of scrolls 210a to rotate the first pair of scrolls 210a in the first rotational direction while a second ring gear is operably coupled to the second pair of scrolls 210b to rotate the second pair of scrolls 210b in the second rotational direction. Thus, it should be appreciated that there are many different ways that the first pair of scrolls 210a and the second pair of scrolls 210b can be rotated in opposite rotational directions during the cup dispensing operation.

As mentioned previously, the scrolls 210 are arranged along a four-side polygon with each of the plurality of scrolls 210 located at one of the corners of the polygon. In the embodiments described herein, the scrolls 210 located along opposite corners of the polygon that are diagonal from one another rotate in opposite directions. Thus, the scrolls 210 that are diagonal from one another rotate in opposite directions. Furthermore, each scroll is adjacent to one scroll that is rotating in the same direction and one scroll that is rotating in the opposite direction. The term "pair of scrolls" as used herein refers to two scrolls that are adjacent to one another and that rotate in the same direction during a particular phase of the cup dispensing operation.

Referring to FIG. 11, a ring gear 220a is illustrated in accordance with another embodiment of the present invention. The ring gear 220a could be used in the cup dispensing assembly 200 as an alternative to the ring gear 220. The ring gear 220a is identical to the ring gear 220 previously described except for the differences noted below. The ring gear 220a will be similarly numbered to the ring gear 220, except that the suffix "a" will be used. The ring gear 220a comprises a first set of gear teeth 223a and a second set of gear teeth 224a. The first set of gear teeth 223a are configured to interact with the first pair of scrolls 210a and the second set of gear teeth 223b are configured to interact with the second pair of scrolls 210b. The difference between the ring gear 220a and the ring gear 220 is that the first and second sets of gear teeth 223a, 224a are not at different elevations. However, the first set of gear teeth 223a have a greater height than the second set of gear teeth 224a.

Specifically, the first set of gear teeth 223a which interact with the first pair of scrolls 210a have a first height and the second set of gear teeth 224a which interact with the idler gears 230a, 231a, which in turn interact with the second set of scrolls 210b, have a second height which is less than the first height. In the exemplified embodiment, a top end 215a of the first set of gear teeth 223a is aligned or flush with a top end 225a of the ring gear 220a. Moreover, a top end 216a of the second set of gear teeth 224a is offset downwardly relative to the top end 225a of the gear ring 220a. This allows the gear portions 211a of the first set of scrolls 210a to interact with the first set of gear teeth 223a while the gear portions 211b of the second set of scrolls 210b do not directly interact with the second set of gear teeth 224a.

Referring to FIG. 12A, the interaction between the first pair of scrolls 210a and the first set of gear teeth 223a of the gear ring 220a is illustrated and will be briefly described. As with the previously described embodiment, the gear portions 211a of the first pair of scrolls 210a interact directly with the first set of gear teeth 223a of the gear ring 220a.

Referring to FIG. 12B, the interaction between the second pair of scrolls 210b and the second set of gear teeth 224a of the gear ring 220a is illustrated and will be briefly described. In this embodiment, the gear portions 211b of the second pair of scrolls 210b have a reduced height as compared with the gear portions 211a of the first pair of scrolls 2120a. This is to ensure that the gear portions 211b of the second pair of scrolls 210b do not interact directly with the second set of gear teeth 224b of the gear ring 220a. Rather, as with the embodiment previously described, first and second idler gears 230a, 231a are used as the intermediary that is operably coupled to both the second set of gear teeth 224b and to the gear portions 211b of the second pair of scrolls 210b. The idlers gears 230a, 231 allow the second pair of scrolls 210b to rotate in the same direction as the gear ring 220a, which is the opposite direction that the first pair of scrolls 210a rotate, as described in the previous embodiment. Thus, even with the modified gear ring 220a and the modifications made to the gear portions 211b of the second pair of scrolls 210b, the operation is the same as with the previously described embodiment.

As noted above, in the exemplified embodiment the cup splitters 212 of the scrolls of the first pair of scrolls 210a are mirror images of the cup splitters 212 of the scrolls of the second pair of scrolls 210b. Thus, the cup splitters 212 of the first pair of scrolls extend helically downwardly in a clockwise direction whereas the cup splitters 212 of the second pair of scrolls 210b extend helically downwardly in a counterclockwise direction. In the exemplified embodiment, the scrolls of the first and second pairs of scrolls 210a, 210b rotate at the same speed (measured in rotations per minute or RPM). The reason for this is that it facilitates pushing the cup equally at all points at the same speed. However, this same function could be achieved by operating the counter rotating scrolls at a different RPM by changing the pitch of the cup splitters 212 in some alternative embodiments.

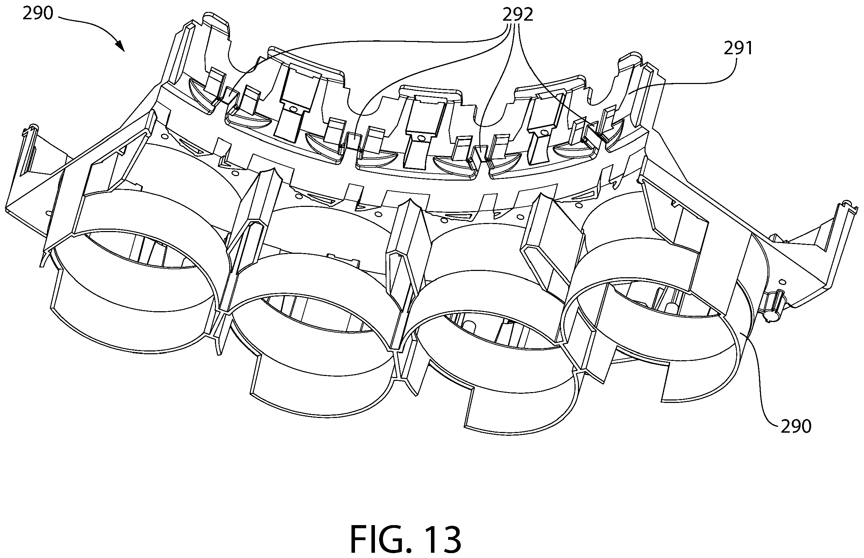

As illustrated in Figs. 13-16, the beverage vending machine 1000 may also comprise a brake sub-system 800 for locking the carousel 290 in position and preventing it from moving during the cup dispensing process. More specifically, in the exemplified embodiment the brake sub-system 800 may be activated in both rotational directions of the ring gear 220. This means that the brake sub-system 800 will be activated to lock the carousel 290 in position both when the ring gear 220 moves in a first direction to dispense a lowermost cup from a stack of cups (from the storage position of FIG. 8A to the dispensing position of FIG. 8B) and when the ring gear 220 moves in a second direction that is opposite the first direction (from the dispensing position of FIG. 8B to the storage position of FIG. 8A) to "reset" the scrolls 210 as described previously herein. The brake sub-system 800 may be unlocked when none of the cup dispensing mechanisms 201 of the cup dispensing assembly 200 are actively dispensing a cup from a stack or being "reset," thereby permitting rotation of the carousel 290 when the scrolls 210 and the ring gear 220 are not rotating. The reason that this is desirable is that if the carousel 290 is not locked when the scrolls 210 and the ring gear 220 are rotating during a cup dispensing operation, inertia may cause the carousel 290 to move/rotate accidentally as well during the cup dispensing operation. However, this is not desirable because this will result in misalignment between the ring gear 220 and the actuator mechanism 400 which may result in the cup dispensing mechanism 201 failing to properly dispense the lowermost cup from the stack of cups that it is supporting.

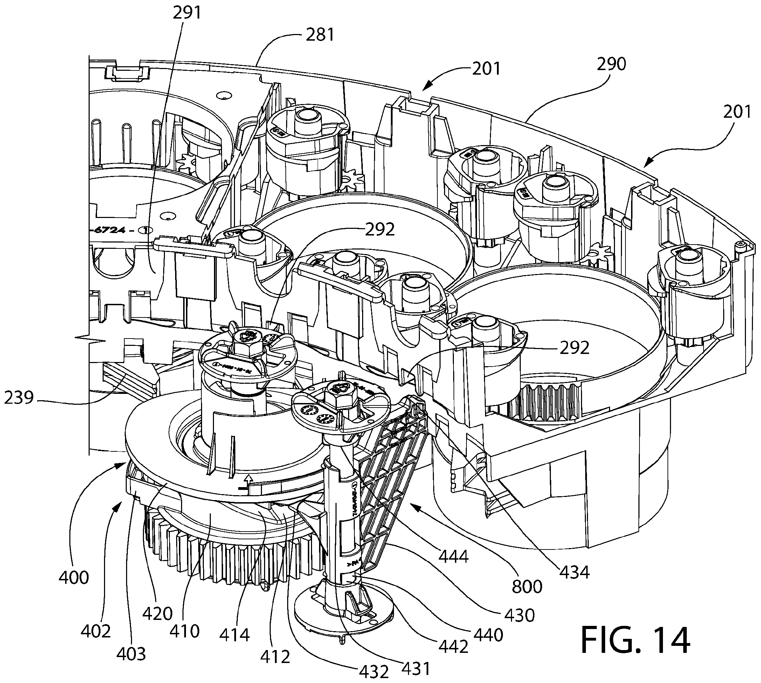

The brake sub-system 800 of the beverage vending machine 1000 is formed by the interaction of the actuator mechanism 400 with the carousel 290. As best seen in FIG. 13, the carousel 290 has a plurality of cam lock registers 292, with each cam lock register 292 corresponding to one of the cup dispensing sections 201. That is, there is at least one of the cam lock registers 291 aligned with each of the cup dispensing sections/mechanisms 201 of the cup dispensing assembly 200. The cam lock registers 292 are located along the inner surface 291 of the carousel 290. Only a portion of the carousel 290 is illustrated for clarity. The cam lock registers 291 comprise a notch or recess as best seen in FIGS. 13 and 14.

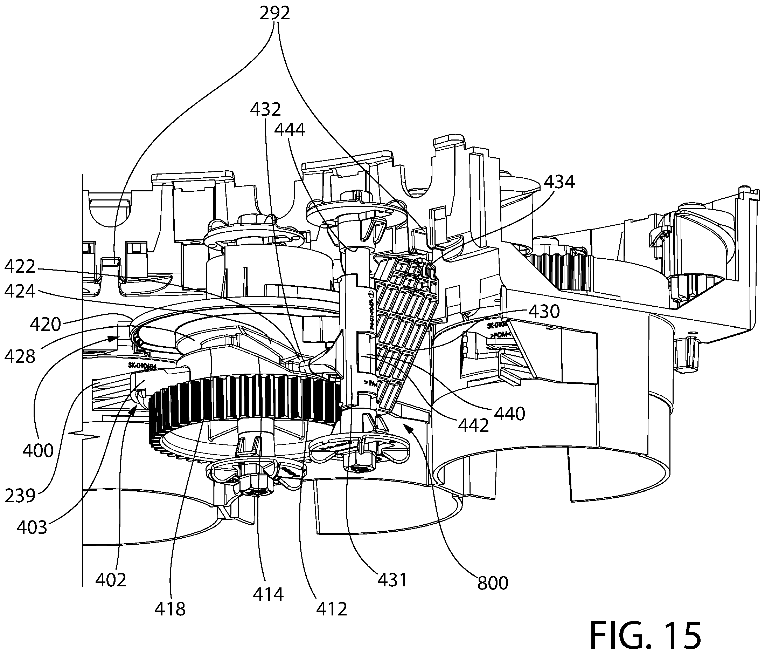

Turning to FIGS. 14-16, the brake sub-system 800 will be further described. FIG. 14 illustrates the actuator mechanism 400 and the portion of the carousel 290 as they would appear inside the beverage vending machine 1000. The carousel 290 is illustrated showing several of the cup dispensing sections 201 and the respective cam lock registers 292. The actuator mechanism 400 comprises a cam assembly 402, the cam assembly 402 comprising an upper cam 420 and a lower cam 410. The upper cam 420 has a plurality of upper cam surfaces which, in cooperating with a plurality of lower cam surfaces on the lower cam 410, guide a follower 432 of a lock 430. The lower cam 410 has an unlocked surface 412, a ramp surface 414, and a locked surface 418 as best seen in FIG. 15. The upper cam 420 has a corresponding unlocked surface 422, a ramp surface 424, and a locked surface 428 as best seen in FIG. 15.

The actuator mechanism 400 further comprises the lock 430 and a guide pin 440. The guide pin 440 is configured to enable sliding motion of the lock 430 along the length of the guide pin 440 while preventing rotation of the lock 430 on the guide pin 440. In the unlocked state, the lock 430 is proximate a lower end 442 of the guide pin 440. In the locked state, the lock 430 is proximate an upper end 444 of the guide pin 440.

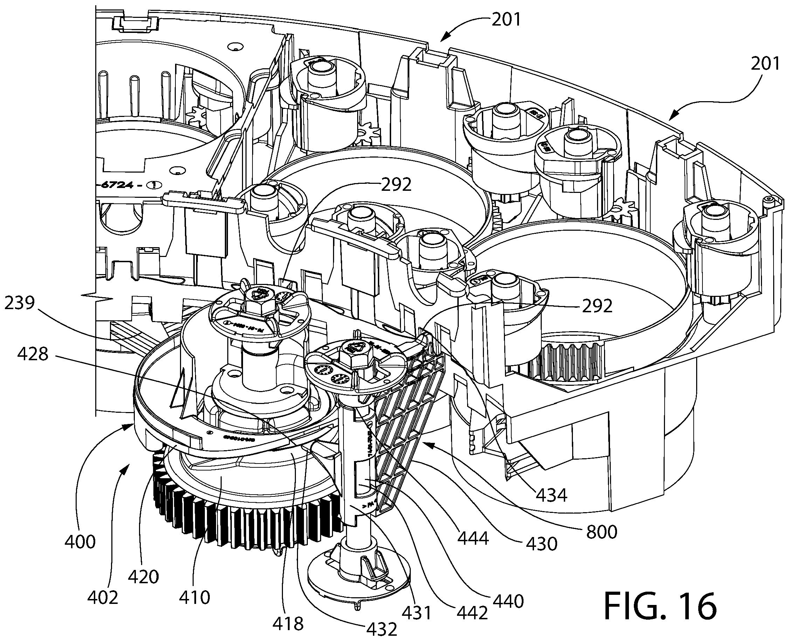

The follower 432 of the lock 430 extends from the guide pin 440 and facilitates the movement of the lock 430 along the guide pin 440. That is, the lock 430 comprises a sheath portion 431 which is positioned around the guide pin 440 and is configured to slide relative to the guide pin 440 and the follower 432 which extends from the sheath portion 431. As discussed previously, the follower 432 rides on the surfaces of the upper cam 420 and lower cam 410 to move the lock 430 from an unlocked state proximate the lower end 442 of the guide pin 440 to a locked state where the lock 430 is moved proximate the upper end 444 of the guide pin 440. Thus, the lock 430 moves in an upward axial direction when transitioning from the unlocked state to the locked state. A locking protrusion 434 of the lock 430 is driven into one of the cam lock register 292 when the lock 430 is moved into the locked state (FIG. 16). This prevents rotation of the carousel 290 until the lock 430 is returned to the unlocked state (FIGS. 14 and 15). Particularly, as seen in FIG. 16, when the locking protrusion 434 nests within the cam lock register 292 of the carousel 290, the carousel 290 is prevented from rotating due to the locking protrusion 434 interfering with any such attempts to rotate the carousel 290. Thus, by having the brake sub-system 800 in the locked state as shown in FIG. 16 during a cup dispensing operation, the carousel 290 is prevented from movement during the cup dispensing operation.

In the exemplified embodiment, the locking protrusion (which may be referred to herein as a locking feature) 434 of the lock 430 engages the cam lock register (which may also be referred to herein as a locking feature) 292 of the carousel 290 along a cup dispensing section 201 of the cup dispensing assembly 200 that is adjacent to the cup dispensing section 201 which is currently dispensing a lowermost cup. For example, in the variation shown in FIGS. 14-16, the cup dispensing section 201 immediately to the left of the one which is being engaged/interacted with the lock 430 is the cup dispensing section 201 which is dispensing a cup. Of course, the invention is not to be so limited in all embodiments and in other embodiments the lock 430 may interact with the same cup dispensing section 201 which is dispensing a cup. In still other embodiments, the lock 430 may interact with any of the cup dispensing sections 201 of the cup dispensing assembly 200, including the one which is dispensing the cup, the one on either side of the one dispensing the cup, or any of the other cup dispensing sections 201 no matter how close to or how far from the one dispensing the cup they are located.

The unlocked surfaces 412, 422 of the lower and upper cams 410, 420 dictate the position of the lock 430 when in the unlocked state and can be altered based on the relative positioning of the lock 430 (and particularly the follower 432 thereof) with respect to these surfaces. Similarly, the locked surfaces 418, 428 dictate the position of the lock 430 in the locked state. The ramp surfaces 414, 424 control the movement profile and acceleration speeds for a given speed of rotation of the cam assembly 402. In combination, these surfaces can collectively define the total travel of the lock 430 as well as the speed at which the lock 430 moves in and out of the locked state. In particular, the ramp surfaces 414, 424 need not be flat, and may have a non-linear shape such that they can control the acceleration of the lock 430 as it moves from one state to another. Furthermore, the slope can be altered as desired to achieve any desired rate of movement of the lock 430.

In the exemplified embodiment, the lock 430 engages the cam lock register 292 corresponding to the cup dispensing section 201 immediately adjacent the cup dispensing section 201 where cups are dispensed. In some embodiments the actuator mechanism 400 which is used to activate the scrolls 210 and the actuator mechanism 400 which is used to activate the lock 430 may be different from one another. In another embodiment, the actuator mechanism 400 which is used to activate the scrolls 210 and the actuator mechanism 400 which is used to activate the lock 430 may be the same device (this is the case in the exemplified embodiment). In such an embodiment, in order to provide room for the actuator mechanism 400 to simultaneously actuate the actuation member 239 and lock the carousel 290, the lock 430 engages the cam lock register 292 of the cup dispensing section 201 immediately clockwise relative to the cup dispensing section 210 from which a cup is being dispensed. Thus, the cup dispensing section 201 positioned at the lock 430 does not dispense a cup. Instead, the cup dispensing section 201 which is counterclockwise one position is the cup dispensing section 201 which is operated by the actuator mechanism 400.

During a dispensing operation, the actuator mechanism 400 first rotates the cam assembly 402 to cause the lock 430 to move from the unlocked state to the locked state. As noted above, this causes the locking protrusion 434 to engage the cam lock register 292 located along the one of the cup dispensing sections 201 which is immediately clockwise of the cup dispensing section 201 containing cups to be dispensed. In particular, during this initial part of the dispensing operation, the cam assembly 402 rotates (it may be rotated by a bi-directional motor) a first distance in a first rotational direction (clockwise in the exemplified embodiment), which causes the lower and upper cams 402 to rotate in the first rotational direction. During this initial part of the dispensing operation, the follower 432 rides along the lower and upper cams 410, 420. In particular, the follower 432 rides from the unlocked surfaces 412, 422, along the ramp surfaces 414, 424, and to the locked surfaces 418, 428. When the follower 432 is located along the locked surfaces 418, 428, the locking protrusion 434 is raised/elevated so that it nests within the cam lock register 292. This is because the locked surfaces 418, 428 are elevated relative to the unlocked surfaces 412, 422, as best seen in FIG. 15.

Next, the cam assembly 402 is made to continue rotating in the same direction until an engagement feature 403 of the actuator mechanism 400 engages the actuation member 239 of the ring gear 239. As the cam assembly 402 continues to rotate, the engagement feature 403 of the actuator assembly 400 moves the actuation member 239, which in turn forces the ring gear 220 to rotate to the dispensed position as discussed above (see, for example, FIGS. 8A and 8B). This dispenses a cup by rotating the scrolls 210, as has been discussed in detail above. Subsequently, while the lock 430 is still in the locked state, the actuator mechanism 400 moves the actuation member 239 back to the storage position from the dispensed position. That is, as noted above the actuator mechanism 400 may be coupled to a bi-direction motor (not shown). Thus, after the ring gear 220 has been rotated to the dispensed position and the cup has been dispensed, the motor may start to rotate in the opposite direction, which in turn will cause the actuator mechanism 400 and the cam assembly 402 to rotate in the opposite direction. In doing so, the engagement feature 403 will contact the actuation member 239 and move it back to its initial, non-dispensing position (i.e., storage position). The cam assembly 402 will then continue to rotate, which will cause the follower 432 to move from being located along the locked surfaces 418, 428 of the lower and upper cams 410, 420 to being located along the unlocked surfaces 412, 422 of the lower and upper cams 410, 420. Once the follower 432 is aligned with the unlocked surfaces 412, 422 of the lower and upper cams 410, 420, the locking protrusion 434 disengages from the cam lock register 292, so that the carousel 290 can once again be rotated. After the actuation member 239 is moved back to the storage position, the cam assembly 402 moves the lock 430 from the locked state to the unlocked state. This process ensures that no movement of the carousel 290 can occur during dispensing or when returning to the storage position.

It should be appreciated that the brake sub-system 800 is in the locked state at all times during rotation of the scrolls 210. In particular, the brake sub-system 800 is in the locked state as the scrolls 210 are rotating in a first direction during cup dispensing and also as the scrolls 210 are rotating in a second direction when being reset back to their original position. Stated another way, the brake sub-system 800 is in the locked state as the ring gear 220 is rotating in the first direction during cup dispensing and as the ring gear 220 is rotating in the second direction when being reset back to its original position. It is only after completion of all rotation of the ring gear 220 and the scrolls 210 that the brake sub-system 800 alters from the locked state to the unlocked state.

The cam lock register 292 is shaped as a rectangular recess in the exemplified embodiment, although this is not required in all embodiments and modifications to this shape are possible within the scope of the invention claimed herein. The locking protrusion 434 is shaped with angled side surfaces which may be tapered to facilitate alignment during the locking process. Alternately, the cam lock register 292 may have angled surfaces which facilitate alignment or both the cam lock register 292 and the locking protrusion 434 may have angled side surfaces to facilitate alignment. The locking protrusion 434 may also take various other shapes such as a cylindrical or conical pin or combinations thereof. The cam lock register 292 may be formed as a cylindrical hole or a conical hole, or combinations thereof. Any configuration is contemplated which would tolerate some misalignment between the carousel 290 and the lock 430 and still ensure reliable coupling between the lock 430 and the carousel 290. Moreover, while the cam lock register 292 is a notch/recess (female component) and the locking protrusion 434 is a protrusion (male component) in the exemplified embodiment, the opposite may be true in other embodiments. In particular the cam lock register 292 may be a protruding feature and the locking protrusion 434 may be a notch or recess that mates with the protruding feature of the cam lock register 292 in other embodiments while achieving the same function. In some embodiments, the cam lock register 292 and the locking protrusion 434 (and all alternatives thereto as described herein) may be referred to herein as a first locking feature and a second locking feature, respectively.

Conventionally, 'In Cup' vending machines such as the one described herein above (although not limited to this particular machine) have dispensed the desired beverage in a plastic cup. However, there is a current trend to find alternatives to plastic in all industries, including in 'In Cup' beverage vending machines. Thus, for example, there is a desire to use paper cups instead of plastic cups due to the increased recyclability potential for paper versus plastic. Thus, in some embodiments, the cups of the stacks of cups 300 described herein may be formed from a paper-based material. Such cups may be made out of paper and then lined or coated with plastic or wax to prevent liquid from leaking out or soaking through the paper. The paper material may be recycled paper in some embodiments.

In other embodiments, the paper may not be lined with plastic, because doing so may render the paper cup unable to be recycled in normal paper waste streams. Thus, in some embodiments the cup may be formed from paper and include a water-based dispersion coating which prevents leaks while still enabling the cup to be recycled in normal paper waste streams.

Of course, the invention is not limited to the vending cups being formed from paper and they could be formed from plastic, polystyrene, polypropylene, polyethylene, polylactic acid, metal, or the like or any other materials typically used to form cups that are intended to hold beverages in other embodiments.

Moreover, the cup dispensing assembly 200 may be configured to handle cups having multiple pitches, with the pitch being the distance between rim centers when the cups are stacked. Thus, the pitch need not be consistent throughout the stack for proper dispensing to take place in all embodiments. Furthermore, the cups in the stacks 300 may be interlocked (typically done when the cups are plastic) or non-interlocked (used when the cups are paper). Interlocking is some sort of mechanical engagement between adjacent cups that creates a temporary lock therebetween. The machine described herein is able to dispense cups one at a time regardless of whether they are interlocked or not.

Moreover, in some non-claimed embodiments the invention may be directed to a cup dispensing assembly regardless of its end use. Thus, for example, the cup dispensing assembly 200 may be one that is used in a manufacturing factory such as one that manufactures cups. In such factories, there may be a need to dispense cups at high speed and without distorting said cups during the dispensing. Thus, the cup dispensing assembly 200 described herein can be used for this purpose and for other purposes and is not limited to use in a beverage vending machine in all embodiments.

While the invention has been described with respect to specific examples including presently preferred modes of carrying out the invention, those skilled in the art will appreciate that structural and functional modifications may be made without departing from the scope of the invention as set forth in the appended claims.

## Claims

1. A beverage vending machine (1000) comprising:
a cup dispensing assembly (200) comprising:
at least one cup dispensing mechanism (201), the cup dispensing mechanism (201) comprising a plurality of cup splitting scrolls (210) arranged around a cup dispensing aperture (202), wherein the plurality of cup splitting scrolls (210) are configured to support a stack of cups (300) and dispense a lowermost cup (301) of the stack of cups (300) through the cup dispensing aperture (202) during a cup dispensing operation, the plurality of cup splitting scrolls (210) comprising a first pair of adjacent scrolls (210a) and a second pair of adjacent scrolls (210b); and
a ring gear (220, 220a) configured to rotate about a rotational axis (B-B), the ring gear (220, 220a) comprising a first set of gear teeth (223, 223a) and a second set of gear teeth (224, 224a) that is circumferentially spaced apart from the first set of gear teeth (223, 223a);
wherein each of the scrolls of the first pair of adjacent scrolls (210a) comprises a gear portion (211a) that is directly coupled to the first set of gear teeth (223, 223a);
**characterized in that**:
a first idler gear (230) in direct engagement with the second set of gear teeth (224, 224a) of the ring gear (220, 220a) and with a gear portion (211b) of a first scroll of the second pair of adjacent scrolls (210b); and
a second idler gear (231) in direct engagement with the second set of gear teeth (224, 224a) of the ring gear (220, 220a) and with a gear portion (211b) of a second scroll of the second pair of adjacent scrolls (210b);
wherein rotation of the ring gear (220, 220a) causes the first pair of adjacent scrolls (210a) to rotate in a first rotational direction and the second pair of adjacent scrolls (210b) to rotate in a second rotational direction that is opposite the first rotational direction during the cup dispensing operation.

2. The beverage vending machine (1000) according to claim 1 further comprising a reference plane (RP1) that intersects a centerpoint (CP) of the cup dispensing aperture (202), and wherein the first pair of adjacent scrolls (210a) are located on a first side of the reference plane and the second pair of adjacent scrolls (210b) are located on a second side of the reference plane.

3. The beverage vending machine (1000) according to claim 1 or claim 2 wherein the first pair of adjacent scrolls (210a) are spaced apart from one another by a first distance (D1) and the second pair of adjacent scrolls (210b) are spaced apart from one another by a second distance (D2) that is greater than the first distance (D1).

4. The beverage vending machine (1000) according to claim 1 wherein the first and second idler gears (230, 231) have a first height and the second set of gear teeth have a second height, the first height being greater than the second height.

5. The beverage vending machine (1000) according to claim 1 wherein the first and second idler gears (230, 231) are located between the first and second scrolls of the second pair of adjacent scrolls (210b).

6. The beverage vending machine (1000) according to any one of claims 1 to 5 wherein the first set of gear teeth (223a) of the ring gear (220a) have a first height and the second set of gear teeth (224a) of the ring gear (220a) have a second height, the first height being greater than the second height, and wherein the ring gear (220a) extends from a first end to a second end in a direction of the rotational axis (B-B) of the ring gear (220a), a top end of the first set of gear teeth (223a) located closer to the first end than a top end of the second set of gear teeth (224a).

7. The beverage vending machine (1000) according to claim 6 wherein the gear portions (211b) of the first and second scrolls of the second pair of adjacent scrolls (210b) have a reduced height as compared with the gear portions (211a) of the first pair of adjacent scrolls (210a).

8. The beverage vending machine (1000) according to any one of claims 1 to 7 further comprising a plurality of the cup dispensing mechanisms (201) and an actuator assembly configured for operable coupling, one at a time, to the ring gears (220, 220a) of each of the plurality of cup dispensing mechanisms (200), the actuator assembly configured to rotate a particular one of the ring gears (220, 220a) in response to user selection of a beverage on a user interface of the beverage vending machine (1000) to perform the cup dispensing operation.

9. The beverage vending machine (1000) according to any one of claims 1 to 8 wherein the plurality of cup splitting scrolls (210) are arranged along a four-sided polygon with each of the plurality of cup splitting scrolls (210) located at one of the corners of the four-sided polygon, and wherein the cup splitting scrolls (210) located along opposite corners that are diagonal from one another rotate in opposite directions.

10. The beverage vending machine (1000) according to any one of claims 1 to 9 wherein the cup dispensing assembly (200) comprises a ring-shaped carousel (290) having an inner surface and an outer surface, and wherein the first pair of adjacent scrolls (210a) are positioned adjacent to the inner surface of the carousel (290) and the second pair of adjacent scrolls (210b) are positioned adjacent to the outer surface of the carousel (290).

11. The beverage vending machine (1000) according to claim 10 further comprising a plurality of the cup dispensing mechanisms (201) each comprising a reference plane that intersects a centerpoint of the cup dispensing aperture (202), the reference plane being positioned in between the inner and outer surfaces of the ring-shaped carousel (290) so that the reference plane does not intersect the inner and outer surfaces of the ring-shaped carousel (290) along the cup dispensing mechanism (201), and wherein the first pair of adjacent scrolls (210a) are located on a first side of the reference plane and the second pair of adjacent scrolls (210b) are located on a second side of the reference plane.

## Patentansprüche

1. Getränkeautomat (1000), umfassend:
eine Becherabgabeanordnung (200), umfassend:
mindestens einen Becherabgabemechanismus (201), wobei der Becherabgabemechanismus (201) eine Vielzahl von Bechertrennrollen (210) umfasst, die um eine Becherabgabeöffnung (202) eingerichtet sind, wobei die Vielzahl von Bechertrennrollen (210) dazu konfiguriert sind, einen Stapel von Bechern (300) zu tragen und einen untersten Becher (301) des Stapels von Bechern (300) durch die Becherabgabeöffnung (202) während eines Becherabgabevorgangs abzugeben, wobei die Vielzahl von Bechertrennrollen (210) ein erstes Paar von benachbarten Rollen (210a) und ein zweites Paar von benachbarten Rollen (210b) umfasst; und
einen Zahnkranz (220, 220a), der dazu konfiguriert ist, sich um eine Drehachse (B-B) zu drehen, wobei der Zahnkranz (220, 220a) einen ersten Satz von Kranzzähnen (223, 223a) und einen zweiten Satz von Kranzzähnen (224, 224a), der von dem ersten Satz von Kranzzähnen (223, 223a) umlaufend beabstandet ist, umfasst;
wobei jede der Rollen des ersten Paars von benachbarten Rollen (210a) einen Kranzabschnitt (211a) umfasst, der direkt an den ersten Satz von Kranzzähnen (223, 223a) gekoppelt ist;
**dadurch gekennzeichnet, dass**:
ein erstes Laufrad (230) in direktem Eingriff mit dem zweiten Satz von Kranzzähnen (224, 224a) des Zahnkranzes (220, 220a) und mit einem Kranzabschnitt (211b) einer ersten Rolle des zweiten Paars von benachbarten Rollen (210b) und
ein zweites Laufrad (231) in direktem Eingriff mit dem zweiten Satz von Kranzzähnen (224, 224a) des Zahnkranzes (220, 220a) und mit einem Kranzabschnitt (211b) einer zweiten Rolle des zweiten Paars von benachbarten Rollen (210b);
wobei eine Drehung des Zahnkranzes (220, 220a) bewirkt, dass das erste Paar von benachbarten Rollen (210a) während des Becherabgabevorgangs sich in einer ersten Drehrichtung dreht und das zweite Paar von benachbarten Rollen (210b) sich in einer zweiten Drehrichtung dreht, die entgegengesetzt zu der ersten Drehrichtung ist.

2. Getränkeautomat (1000) nach Anspruch 1, weiterhin umfassend eine Bezugsebene (RP1), die einen Mittelpunkt (CP) der Becherabgabeöffnung (202) durchschneidet, und wobei das erste Paar von benachbarten Rollen (210a) auf einer ersten Seite der Bezugsebene angeordnet ist und das zweite Paar von benachbarten Rollen (210b) auf einer zweiten Seite der Bezugsebene angeordnet ist.

3. Getränkeautomat (1000) nach Anspruch 1 oder Anspruch 2, wobei das erste Paar von benachbarten Rollen (210a) voneinander um einen ersten Abstand (D1) beabstandet ist und das zweite Paar von benachbarten Rollen (210b) voneinander um einen zweiten Abstand (D1), der größer als der erste Abstand (D1) ist, beabstandet ist.

4. Getränkeautomat (1000) nach Anspruch 1, wobei das erste und das zweite Laufrad (230, 231) eine erste Höhe aufweisen und der zweite Satz von Kranzzähnen eine zweite Höhe aufweist, wobei die erste Höhe größer als die zweite Höhe ist.

5. Getränkeautomat (1000) nach Anspruch 1, wobei das erste und das zweite Laufrad (230, 231) zwischen der ersten und der zweiten Rolle des zweiten Paars von benachbarten Rollen (210b) angeordnet sind.

6. Getränkeautomat (1000) nach einem der Ansprüche 1 bis 5, wobei der erste Satz von Kranzzähnen (223a) des Zahnkranzes (220a) eine erste Höhe aufweist und der zweite Satz von Kranzzähnen (224a) des Zahnkranzes (220a) eine zweite Höhe aufweist, wobei die erste Höhe größer als die zweite Höhe ist, und wobei der Zahnkranz (220a) sich von einem ersten Ende zu einem zweiten Ende in einer Richtung der Drehachse (B-B) des Zahnkranzes (220a) erstreckt, wobei ein oberes Ende des ersten Satzes von Kranzzähnen (223a) näher zu dem ersten Ende angeordnet ist als ein oberes Ende des zweiten Satzes von Kranzzähnen (224a).

7. Getränkeautomat (1000) nach Anspruch 6, wobei die Kranzabschnitte (211b) der ersten und der zweiten Rolle des zweiten Paars von benachbarten Rollen (210b) eine verringerte Höhe im Vergleich zu den Kranzabschnitten (211a) des ersten Paars von benachbarten Rollen (210a) aufweisen.

8. Getränkeautomat (1000) nach einem der Ansprüche 1 bis 7, weiterhin umfassend eine Vielzahl von Becherabgabemechanismen (201) und eine Betätigungselementanordnung, die zur betreibbaren Kopplung an jeweils einen der Zahnkränze (220, 220a) jeder der Vielzahl von Becherabgabemechanismen (200) konfiguriert ist, wobei die Betätigungselementanordnung dazu konfiguriert ist, einen bestimmten der Zahnkränze (220, 220a) als Reaktion auf eine Benutzerauswahl eines Getränks auf einer Benutzerschnittstelle des Getränkeautomaten (1000) zu drehen, um den Becherabgabevorgang durchzuführen.

9. Getränkeautomat (1000) nach einem der Ansprüche 1 bis 8, wobei die Vielzahl von Bechertrennrollen (210) entlang eines vierseitigen Polygons eingerichtet ist, wobei jede der Vielzahl von Bechertrennrollen (210) an einer der Ecken des vierseitigen Polygons angeordnet ist, und wobei die Bechertrennrollen (210) entlang entgegengesetzten Ecken angeordnet sind, die sich diagonal zueinander in entgegengesetzte Richtungen drehen.

10. Getränkeautomat (1000) nach einem der Ansprüche 1 bis 9, wobei die Becherabgabeanordnung (200) ein ringförmiges Karussell (290) mit einer Innenfläche und einer Außenfläche umfasst, und wobei das erste Paar von benachbarten Rollen (210a) benachbart zu der Innenfläche des Karussells (290) positioniert ist und das zweite Paar von benachbarten Rollen (210b) benachbart zu der Außenfläche des Karussells (290) positioniert ist.

11. Getränkeautomat (1000) nach Anspruch 10, weiterhin umfassend eine Vielzahl der Becherabgabemechanismen (201), die jeweils eine Bezugsebene umfassen, die einen Mittelpunkt der Becherabgabeöffnung (202) durchschneidet, wobei die Bezugsebene zwischen der Innenfläche und der Außenfläche des ringförmigen Karussells (290) positioniert ist, so dass die Bezugsebene die Innenfläche und die Außenfläche des ringförmigen Karussells (290) nicht entlang des Becherabgabemechanismus (201) durchschneidet, und wobei das erste Paar von benachbarten Rollen (210a) auf einer ersten Seite der Bezugsebene angeordnet ist und das zweite Paar von benachbarten Rollen (210b) auf einer zweiten Seite der Bezugsebene angeordnet ist.

## Revendications

1. Un distributeur automatique de boissons (1000) comprenant :
un ensemble de distribution de gobelets (200) comprenant :
un ou plusieurs mécanismes de distribution de gobelets (201), le mécanisme de distribution de gobelets (201) comprenant une pluralité de spirales de séparation de gobelets (210) agencées autour d'une ouverture de distribution de gobelets (202), dans lequel la pluralité de spirales de séparation de gobelets (210) sont configurées pour supporter une pile de gobelets (300) et distribuer un gobelet le plus bas (301) de la pile de gobelets (300) à travers l'ouverture de distribution de gobelets (202) pendant une opération de distribution de gobelets, la pluralité de spirales de séparation de gobelets (210) comprenant une première paire de spirales adjacentes (210a) et une deuxième paire de spirales adjacentes (210b) ; et
une couronne dentée (220, 220a) configurée pour tourner autour d'un axe de rotation (B-B), la couronne dentée (220, 220a) comprenant un premier ensemble de dents d'engrenage (223, 223a) et un deuxième ensemble de dents d'engrenage (224, 224a) qui est espacé du premier ensemble de dents d'engrenage (223, 223a) sur la circonférence ;
dans lequel les spirales de la première paire de spirales adjacentes (210a) comprennent chacune une partie d'engrenage (211a) qui est couplée directement au premier ensemble de dents d'engrenage (223, 223a) ;
**caractérisé en ce que** :
un premier pignon fou (230) est en prise directe avec le deuxième ensemble de dents d'engrenage (224, 224a) de la couronne dentée (220, 220a) et avec une partie d'engrenage (211b) d'une première spirale de la deuxième paire de spirales adjacentes (210b) ; et
un deuxième pignon fou (231) est en prise directe avec le deuxième ensemble de dents d'engrenage (224, 224a) de la couronne dentée (220, 220a) et avec une partie d'engrenage (211b) d'une deuxième spirale de la deuxième paire de spirales adjacentes (210b) ;
dans lequel la rotation de la couronne dentée (220, 220a) amène la première paire de spirales adjacentes (210a) à tourner dans une première direction de rotation et la deuxième paire de spirales adjacentes (210b) à tourner dans une deuxième direction de rotation qui est opposée à la première direction de rotation pendant l'opération de distribution de gobelets.

2. Le distributeur automatique de boissons (1000) selon la revendication 1, comprenant en outre un plan de référence (RP1) qui croise un point central (CP) de l'ouverture de distribution de gobelets (202), et dans lequel la première paire de spirales adjacentes (210a) sont situées sur un premier côté du plan de référence et la deuxième paire de spirales adjacentes (210b) sont situées sur un deuxième côté du plan de référence.

3. Le distributeur automatique de boissons (1000) selon la revendication 1 ou revendication 2, dans lequel la première paire de spirales adjacentes (210a) sont espacées l'une de l'autre d'une première distance (D1) et la deuxième paire de spirales adjacentes (210b) sont espacées l'une de l'autre d'une deuxième distance (D2) qui est supérieure à la première distance (D 1).

4. Le distributeur automatique de boissons (1000) selon la revendication 1, dans lequel les premier et deuxième pignon fous (230, 231) ont une première hauteur et le deuxième ensemble de dents d'engrenage a une deuxième hauteur, la première hauteur étant supérieure à la deuxième hauteur.

5. Le distributeur automatique de boissons (1000) selon la revendication 1 dans lequel les premier et deuxième pignon fous (230, 231) sont situés entre les première et deuxième spirales de la deuxième paire de spirales adjacentes (210b).

6. Le distributeur automatique de boissons (1000) selon l'une quelconque des revendications 1 à 5, dans lequel le premier ensemble de dents d'engrenage (223a) de la couronne dentée (220a) a une première hauteur et le deuxième ensemble de dents d'engrenage (224a) de la couronne dentée (220a) a une deuxième hauteur, la première hauteur étant supérieure à la deuxième hauteur, et dans lequel la couronne dentée (220a) s'étend d'une première extrémité à une deuxième extrémité dans une direction de l'axe de rotation (B-B) de la couronne dentée (220a), une extrémité supérieure du premier ensemble de dents d'engrenage (223a) étant située plus proche de la première extrémité que d'une extrémité supérieure du deuxième ensemble de dents d'engrenage (224a).

7. Le distributeur automatique de boissons (1000) selon la revendication 6, dans lequel les parties d'engrenage (211b) des première et deuxième spirales de la deuxième paire de spirales adj acentes (210b) ont une hauteur réduite comparée à celle des parties d'engrenage (211a) de la première paire de spirales adjacentes (210a).

8. Le distributeur automatique de boissons (1000) selon l'une quelconque des revendications 1 à 7, comprenant en outre une pluralité du mécanismes de distribution de gobelets (201) et un ensemble actionneur configuré en vue d'un couplage fonctionnel, un à la fois, aux couronnes dentées (220, 220a) de chaque mécanisme de la pluralité de mécanismes de distribution de gobelets (200), l'ensemble actionneur étant configuré pour faire tourner une couronne dentée particulière des couronnes dentées (220, 220a) en réponse à la sélection d'un utilisateur d'une boisson sur une interface utilisateur du distributeur automatique de boissons (1000) pour effectuer l'opération de distribution de gobelets.

9. Le distributeur automatique de boissons (1000) selon l'une quelconque des revendications 1 à 8, dans lequel la pluralité de spirales de séparation de gobelets (210) sont agencées le long d'un polygone à quatre côtés avec les spirales de la pluralité de spirales de séparation de gobelets (210) situées chacune à l'un des coins du polygone à quatre côtés, et dans lequel les spirales de séparation de gobelets (210) situées le long des coins opposés qui sont en diagonale les uns des autres tournent dans des directions opposées.

10. Le distributeur automatique de boissons (1000) selon l'une quelconque des revendications 1 à 9, dans lequel l'ensemble de distribution de gobelets (200) comprend un carrousel en forme d'anneau (290) ayant une surface intérieure et une surface extérieure, et dans lequel la première paire de spirales adjacentes (210a) sont positionnées adjacentes à la surface intérieure du carrousel (290) et la deuxième paire de spirales adjacentes (210b) sont positionnées adjacentes à la surface extérieure du carrousel (290).

11. Le distributeur automatique de boissons (1000) selon la revendication 10, comprenant en outre une pluralité du mécanismes de distribution de gobelets (201) chacun comprenant un plan de référence qui croise un point central de l'ouverture de distribution de gobelets (202), le plan de référence étant positionné entre les surfaces extérieure et intérieure du carrousel en forme d'anneau (290) de sorte que le plan de référence ne croise pas les surfaces intérieure et extérieure du carrousel en forme d'anneau (290) le long du mécanisme de distribution de gobelets (201), et dans lequel la première paire de spirales adjacentes (210a) sont situées sur un premier côté du plan de référence et la deuxième paire de spirales adjacentes (210b) sont situées sur un deuxième côté du plan de référence.
